# EUROPEAN PATENT APPLICATION

(11) **EP 4 651 591 A1**
(43) Date of publication of application: **19.11.2025**
(21) Application number: 23915378.6
(22) Date of filing: 13.01.2023
(51) Int. Cl.: H04W 72/04

(54) **CONFIGURATION METHOD AND APPARATUS, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN)
(74) Representative: Penza, Giancarlo
(86) International application number: PCT/CN2023/072156
(87) International publication number: WO 2024/148609

(57) **Abstract**

Provided are a configuration method and apparatus, a terminal device, and a network device. The method includes: the terminal device receives first information, the first information being used to configure beam information of a plurality of component carriers (CCs), the beam information being suitable for the plurality of CCs, and the plurality of CCs supporting a plurality of transmission modes.

## Description

### TECHNICAL FIELD

Embodiments of the present disclosure relate to the technical field of mobile communications, and particularly to a configuration method, a configuration apparatus, a terminal device and a network device.

### BACKGROUND

In a new radio (NR) system, different component carriers (CCs) in carrier aggregation (CA) may be configured for different transmission modes. For example, the CCs may be configured for a single-transmission/reception point (sTRP) transmission mode, a multi-transmission/reception point scheduled based on single-downlink control information (Single-DCI multi-TRP, sDCI-mTRP) transmission mode, or a multi-transmission/reception point scheduled based on multi-downlink control information (Multi-DCI multi-TRP, mDCI-mTRP) transmission mode.

In practical applications, different CCs may be transmitted by using the same beam. However, for the CCs transmitted in different transmission modes, the beam information thereof may be configured in different manners. Thus, a network device is required to configure the same beam information for the CC(s) of a terminal device in each transmission mode, which causes significant signaling overhead.

### SUMMARY

Embodiments of the present disclosure provide a configuration method, a configuration apparatus, a terminal device and a network device.

According to an embodiment of the present disclosure, a configuration method is provided, and the configuration method includes the following operations.

A terminal device receives first information, where the first information is used to configure beam information for a plurality of CCs, the beam information is applicable to the plurality of CCs, and the plurality of CCs support a plurality of transmission modes.

According to an embodiment of the present disclosure, a configuration method is provided, and the configuration method includes the following operations.

A network device transmits first information, where the first information is used to configure beam information for a plurality of CCs in a terminal device, the beam information is applicable to the plurality of CCs, and the plurality of CCs support a plurality of transmission modes.

According to an embodiment of the present disclosure, a configuration apparatus is provided, the configuration apparatus is applied to a terminal device, and the configuration apparatus includes a first transceiving unit.

The first transceiving unit is configured to receive first information, where the first information is used to configure beam information for a plurality of CCs, the beam information is applicable to the plurality of CCs, and the plurality of CCs support a plurality of transmission modes.

According to an embodiment of the present disclosure, a configuration apparatus is provided, the configuration apparatus is applied to a network device, and the configuration apparatus includes a second transceiving unit.

The second transceiving unit is configured to transmit first information, where the first information is used to configure beam information for a plurality of CCs in a terminal device, the beam information is applicable to the plurality of CCs, and the plurality of CCs support a plurality of transmission modes.

According to an embodiment of the present disclosure, a communication device is provided, and the communication device may be the terminal device or the network device in the aforementioned technical solutions. The communication device includes a processor, a memory and a transceiver. The transceiver is configured to perform communication with other devices, the memory is configured to store a computer program, and the processor is configured to call and run the computer program stored in the memory to perform each of the aforementioned configuration methods.

According to an embodiment of the present disclosure, a chip is provided, and the chip is configured to perform each of the aforementioned configuration methods.

Specifically, the chip includes a processor configured to call and run a computer program stored in a memory, to cause a device mounted with the chip to perform each of the aforementioned configuration methods.

According to an embodiment of the present disclosure, a computer-readable storage medium is provided, and the computer-readable storage medium is configured to store a computer program, which is executed by a computer to cause the computer to perform each of the aforementioned configuration methods.

According to an embodiment of the present disclosure, a computer program product is provided, and the computer program product includes computer program instructions, which are executed by a computer to cause the computer to perform each of the aforementioned configuration methods.

According to an embodiment of the present disclosure, a computer program is provided, and the computer program, when run on a computer, causes the computer to perform each of the aforementioned configuration methods.

In the configuration method according to the embodiments of the present disclosure, the terminal device can determine, based on the first information transmitted by the network device, the beam information for the plurality of CCs in different transmission modes at once. In other words, the beam information for the plurality of CCs can be updated through the single signaling, which not only can reduce the signaling overhead, but also reduce the overhead and delay for the beam indication, thereby improving the performance of the communication system.

### BRIEF DESCRIPTION OF THE DRAWINGS

The accompanying drawings, which are illustrated herein, provide further understanding of the present disclosure and constitute a part of the present disclosure. The exemplary embodiments of the present disclosure and description thereof are intended to be illustrative of the present disclosure and do not constitute an undue limitation of the present disclosure. In the accompanying drawings:
FIG. 1 is a schematic diagram of an application scenario according to an embodiment of the present disclosure.
FIG. 2A is a schematic diagram of an sDCI-mTRP transmission mode according to an embodiment of the present disclosure.
FIG. 2B is a schematic diagram of switching between an sTRP transmission mode and an sDCI-mTRP transmission mode according to an embodiment of the present disclosure.
FIG. 3 is a schematic diagram of an mDCI-mTRP transmission mode according to an embodiment of the present disclosure.
FIG. 4 is a schematic flowchart of a configuration method according to an embodiment of the present disclosure.
FIG. 5 is a schematic diagram of a scenario in which a common beam is shared by a first CC and a second CC according to an embodiment of the present disclosure.
FIG. 6 is a schematic diagram of a scenario in which a common beam is shared by a first CC and a third CC according to an embodiment of the present disclosure.
FIG. 7 is a schematic diagram of a scenario in which a common beam is shared by a second CC and a third CC according to an embodiment of the present disclosure.
FIG. 8 is a schematic diagram of a first structural composition of a configuration apparatus according to an embodiment of the present disclosure.
FIG. 9 is a schematic diagram of a second structural composition of a configuration apparatus according to an embodiment of the present disclosure.
FIG. 10 is a schematic structural diagram of a communication device according to an embodiment of the present disclosure.
FIG. 11 is a schematic structural diagram of a chip according to an embodiment of the present disclosure.
FIG. 12 is a schematic block diagram of a communication system according to an embodiment of the present disclosure.

### DETAILED DESCRIPTION

The technical solutions in the embodiments of the present disclosure will be described below in combination with the accompanying drawings in the embodiments of the present disclosure. It is apparent that the described embodiments are partial embodiments of the present disclosure but not all of the embodiments. Based on the embodiments in the present disclosure, all other embodiments obtained by those of ordinary skill in the art without creative work shall fall within the scope of protection of the present disclosure.

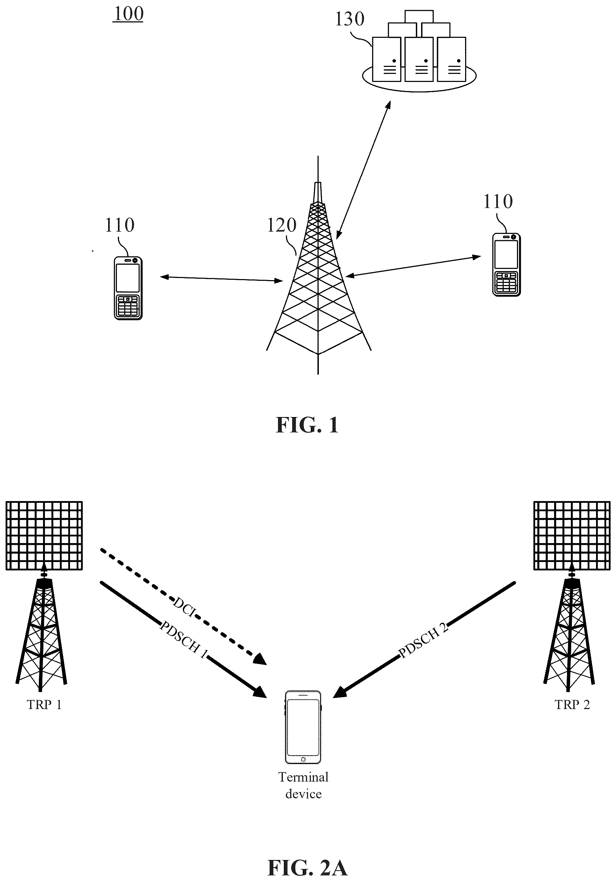

FIG. 1 is a schematic diagram of an application scenario of an embodiment of the present disclosure.

As illustrated in FIG. 1, a communication system 100 may include a terminal device 110 and a network device 120. The network device 120 may communicate with the terminal device 110 through an air interface. Multi-service transmission between the terminal device 110 and the network device 120 is supported.

It should be understood that the embodiments of the present disclosure are illustrated with reference to the communication system 100 only, but are not limited thereto. In other words, the technical solutions of the embodiments of the present disclosure may be applied to various communication systems, such as a long term evolution (LTE) system, an LTE time division duplex (TDD), a universal mobile telecommunication system (UMTS), an Internet of things (IoT) system, a narrow band Internet of things (NB-IoT) system, an enhanced machine-type communications (eMTC) system, a 5-th generation (5G) communication system (also referred to as a new radio (NR) communication system), or a future communication system, etc.

In the communication system 100 illustrated in FIG. 1, the network device 120 may be an access network device that communicates with the terminal device 110. The access network device may provide communication coverage for a specific geographic region and may communicate with a terminal device 110 (e.g., a User Equipment (UE)) in the coverage.

The network device 120 may be an evolutional node B (eNB or eNodeB) in an LTE system, a next generation radio access network (NG RAN) device, a base station (gNB) in an NR system, or a wireless controller in a cloud radio access network (CRAN). The network device may further be a relay station, an access point, a vehicle-mounted device, a wearable device, a hub, a switch, a network bridge, a router, a network device in a future evolved public land mobile network (PLMN) or the like.

The terminal device 110 may be any terminal device, which includes, but not limited to, a terminal device that has a wired or wireless connection to the network device 120 or other terminal devices.

As an example, the terminal device 110 may be an access terminal, a UE, a user unit, a user station, a mobile station, a mobile platform, a remote station, a remote terminal, a mobile device, a user terminal, a terminal, a wireless communications device, a user agent, or user apparatus. The access terminal may be a cellular phone, a cordless phone, a session initiation protocol (SIP) phone, an IoT device, a satellite handheld terminal, a wireless local loop (WLL) station, a personal digital assistant (PDA), a handheld device with a wireless communication function, a computing device, another processing device connected to a wireless modem, a vehicle-mounted device, a wearable device, a terminal device in a 5G network, a terminal device in a future evolved network or the like.

The terminal device 110 may be applied to device to device (D2D) communication.

The wireless communication system 100 may further include a core network device 130 that communicates with the network deice 120. The core network device 130 may be a 5G core (5GC) device, such as an access and mobility management function (AMF), an authentication server function (AUSF), a user plane function (UPF), or a session management function (SMF). Optionally, the core network device 130 may also be an evolved packet core (EPC) device in the LTE network, for example, a session management function + core packet gateway (SMF+PGW-C) device. It should be understood that the SMF+PGW-C may achieve functions that can be achieved by both the SMF and PGW-C. During the process of network evolution, the aforementioned core network device may also be called by other names, or new network entities may be formed by dividing the functions of the core network, which is not limited by the embodiments of the present disclosure.

A connection may be established between various functional units in the communication system 100 through a next generation (NG) interface, to realize communication.

For example, the terminal device may establish an air interface connection with the access network device through an NR interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish a control plane signaling connection with the AMF through an NG interface 2 (abbreviated as N2). The UPF may establish a control plane signaling connection with the SMF through an NG interface 4 (abbreviated as N4). The UPF may interact the user plane data with a data network through an NG interface 6 (abbreviated as N6). The AMF may establish a control plane signaling connection with the SMF through an NG interface 11 (abbreviated as N11). The SMF may establish a control plane signaling connection with a policy control function (PCF) through an NG interface 7 (abbreviated as N7).

One network device, one core network device and two terminal devices are exemplarily shown in FIG. 1. Optionally, the wireless communication system 100 may include multiple network devices, and another number of terminal devices may be included in the coverage of each network device, which is not limited in the embodiments of the present disclosure.

It should be noted that FIG. 1 only illustrates the system to which the present disclosure is applicable by way of example. Of course, the methods illustrated in the embodiments of the present disclosure may also be applicable to other systems. Moreover, the terms "system" and "network" the present disclosure are usually interchangeably used herein. The term "and/or" herein only is used to indicate an association relationship for describing the associated objects, and represents that three kinds of relationships may exist. For example, "A and/or B" may represent three conditions, i.e., independent existence of A, existence of both A and B, and independent existence of B. In addition, the character "/" herein usually represents that the previous and next associated objects form an "or" relationship. It should also be understood that the term "indicate" referred to in the embodiments of the present disclosure may be a direct indication or an indirect indication, and may also be indicative of an associated relationship. For example, "A indicates B", which may mean that A directly indicates B, e.g., B may be obtained through A. It may further mean that A indirectly indicates B, e.g., A indicates C, and B may be obtained through C. It may further mean that there is an association between A and B. It should also be understood that the term "corresponding" referred to in the embodiments of the present disclosure may represent that there is a direct correspondence or an indirect correspondence between the two objects, or may further represent that there is an association relationship between the two objects, a relationship between the indication and the object to be indicated, or a relationship between the configuration and the object to be configured, etc. It should also be understood that the phrase "predefined" or "predefined rules" referred to in the embodiments of the present disclosure may be implemented by pre-storing corresponding codes, tables, or by other means that may be used to indicate relevant information in devices (such as terminal devices and network devices). The specific implementations of which are not limited in the present disclosure. For example, the "predefined" may refer to what is defined in a protocol. It should also be understood that the "protocol" in the embodiments of the present disclosure may be a standard protocol in the communication field, such as an LTE protocol, an NR protocol, and related protocols applied in future communication systems, which is not limited in the present disclosure.

In order to facilitate understanding of the technical solutions of the embodiments of the present disclosure, related technologies of the embodiments of the present disclosure are described below. The following related technologies used as optional solutions may be combined with technical solution of the embodiments of the present disclosure in various ways, and the combinations belong to the scope of protection of the embodiments of the present disclosure.

### 1. Multi-beam system

A design goal of a 5G/NR system includes large bandwidth communication in high frequency bands (such as frequency bands above 6 GHz). When an operating frequency becomes higher, a path loss during a transmission process may increase, thus a coverage capability of a high-frequency system may be affected. In order to effectively ensure the coverage of the high frequency bands in the 5G/NR system, an effective solution is to use a multi-beam transmission technology based on massive multiple-input multiple-output (MIMO) to improve the coverage capability.

In the existing cellular network system (such as a 2-nd generation (2G)/3-rd generation (3G)/4-th generation (4G) network), a cell (sector) uses a wide beam to cover the entire cell. Therefore, at each time moment, each terminal device within a coverage area of the cell has an opportunity to obtain transmission resources allocated by the system.

The multi-beam in the 5G/NR may cover the entire cell by using different beams. That is, each beam may cover a small area, and the effect of covering the entire cell by multiple beams can be achieved through the temporal sweeping. Currently, different beams can be identified by different signals that are carried by the beams.

For example, different synchronization signal/physical broadcast channel blocks (SSBs) are transmitted on different beams, and the terminal device may distinguish the different beams according to the different SSBs. Optionally, different channel state information reference signals (CSI-RSs) are transmitted on different beams, and the terminal device may identify the different beams according to the CSI-RSs/CSI-RS resources

In a multi-beam transmission scenario, a physical downlink control channel (PDCCH) and a physical downlink shared channel (PDSCH) may be transmitted through different downlink transmission beams.

For a non-millimeter wave (such as 2G/3G/4G) system, since the terminal device is typically not configured with an analog beam, the terminal device uses omnidirectional antennas (or near-omnidirectional antennas) to receive signals transmitted by the base station through different downlink transmission beams.

For a millimeter wave system, the terminal device may be configured with the analog beam. In such situation, the terminal device needs to use a downlink reception beam to receive the signal transmitted through a downlink transmission beam corresponding to the downlink reception beam. Therefore, the corresponding beam indication information is required to assist the terminal device in determining the transmission beam-related information of the network device or the reception beam-related information corresponding to the terminal device.

In the NR system, the beam indication information does not directly indicate the beam itself, but refers to the indication according to quasi co-location (QCL) information between signals. Based on the QCL information (which may also be referred to as a QCL hypothesis), the terminal device may determine the reception of the corresponding channel/signal. When the network device transmits a downlink control channel or data channel, the network device may inform the terminal device of the corresponding QCL information by a transmission configuration indicator (TCI) state.

### 2. Multi Transmission/reception point (mTRP) transmission

The mTRP transmission (or called MTRP transmission) refers to a scenario where multiple TRPs may simultaneously communicate with the terminal device on the same CC.

In the enhancement of mTRP transmission in R16, multiple mTRP transmission modes are specified. Specifically, the mTRP transmission modes may be implemented through two different scheduling manners in general.

First manner: multi-transmission/reception point scheduled based on single-downlink control information (sDCI-mTRP) transmission mode

With reference to the schematic diagram of the communication architecture illustrated in FIG. 2A, the network device communicates with the terminal device through two TRPs. Here, the network (NW) uses a piece of DCI to schedule a PDSCH1 transmitted by a TRP1 and a PDSCH2 transmitted by a TRP2. It should be understood that the DCI may be transmitted from one of the two TRPs, and the NW may dynamically adjust which TRP to be used to transmit the DCI.

It should be noted that the TRP1 may transmit the PDSCH1 in a way different from that of the TRP2 transmitting the PDSCH2. Exemplarily, the PDSCH1 and the PDSCH2 may be respectively transmitted by the TRP1 and the TRP2 through space division multiplexing (SDM), frequency division multiplexing (FDM), time division multiplexing (TDM), or single frequency network (SFN), etc.

The first manner is suitable for a condition that an ideal backhaul link is present between TRPs. Further, the above DCI may include one or two TCI states, to indicate dynamic switching between an sTRP transmission and an mTRP transmission.

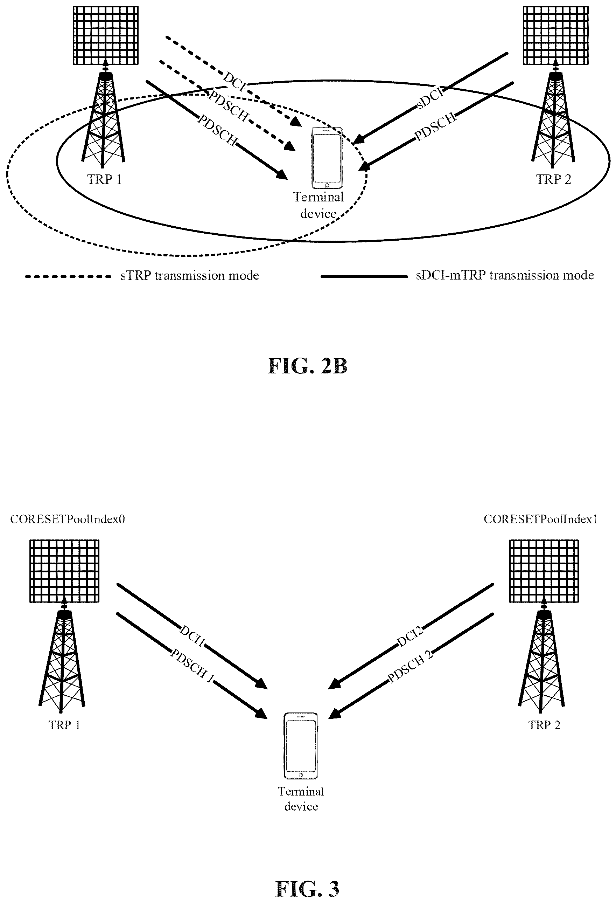

Here, in the sDCI-mTRP transmission mode defined in R16, as illustrated in FIG. 2B, if a TCI state indication field in the sDCI indicates two TCI states, the terminal device performs the mTRP transmission, and each TCI state corresponds to a respective one of the TRPs. If the TCI state indication field in the scheduled DCI indicates one TCI state, the terminal device may consider that the NW falls back the PDSCH transmission to the sTRP transmission.

Exemplarily, when a codepoint (e.g., codepoint "000") of the TCI state indication field in the DCI indicates a TCI state, the sTRP transmission may be indicated; when the codepoint (e.g., codepoint "001") indicates two TCI states, the mTRP transmission may be indicated. Based on the TCI state(s) activated by a media access control control element (MAC CE) and the codepoint in the DCI, the NW may differentiate between a first TCI state and a second TCI state.

The technical reasons for the dynamic switching between the sTRP transmission mode and the mTRP transmission mode are described as follows. When the terminal device is located in an area covered by multiple TRPs (such as the terminal device located at a cell edge, and distances from the terminal device to the multiple TRPs are roughly the same), the mTRP transmission is suitable for enhancing the coverage at the cell edge. Of course, the NW may configure the sTRP transmission for the terminal device when considering load conditions of different TRPs. The transmission mode depends on scheduling implementations on the NW side and should be supported at the protocol level.

It should be noted that, in the existing technology of multiple CCs sharing a common beam in CA, the mTRP operation characteristics described above are designed based on the sDCI-mTRP, rather than the mDCI-mTRP. The mDCI-mTRP is typically deployed in a network environment without ideal backhaul.

Second manner: multi-transmission/reception point scheduled based on multi-downlink control information (mDCI-mTRP) transmission mode

It should be understood that, in the second manner, each TRP transmits the DCI to independently schedule the PDSCH transmission of the TRP. Such operation is more suitable for a scenario where there is no ideal backhaul between the TRPs, that is, each TRP operates independently as much as possible, to reduce the need for interaction between the TRPs. The PDSCH transmission of each TRP may be completely overlapped, partially overlapped, and completely non-overlapped in time-frequency resources.

Exemplarily, with reference to FIG. 3, the network device communicates with the terminal device through the TRP1 and the TRP2. Herein, the TRP1 may transmit, to the terminal device, DCI1 to schedule the transmission of PDSCH1, and the TRP2 may transmit, to the terminal device, DCI2 to schedule the transmission of PDSCH2.

It should be noted that the time-frequency resources of the PDCCH carrying the DCI are defined by a search space and a control resource set (CORESET) associated with the search space. Here, the TCI state for the PDCCH transmission is determined by the TCI state for the CORESET. Higher layer signaling defines one or more TCI states for each CORESET. When the higher layer signaling defines multiple TCI states for each CORESET, at any time moment, the MAC layer signaling may activate one of the TCI states for the PDCCH transmission in all search spaces associated with the CORESET. That is, in the existing specifications, the PDCCH defined by each search space is transmitted based on a unique TCI state for the CORESET associated with the search space.

For the second manner described above, through the higher layer signaling, the NW may configure a parameter "CORESETPoolIndex" (i.e., an index value of a CORESET group) for each CORESET. According to the parameter "CORESETPoolIndex", the NW may group the CORESETs, and each CORESET group corresponds to one TRP. Exemplarily, with reference to FIG. 3, a value of the CORESETPoolIndex for the TRP1 is 0, and a value of the CORESETPoolIndex for the TRP2 is 1.

It should be noted that, considering the flexibility, the parameter "CORESETPoolIndex" may not be configured for the CORESET used in the sDCI-mTRP transmission mode in the first manner.

### 3. TCI state

When the terminal device receives the signal, in order to improve the reception performance, the characteristics of the transmission environment corresponding to the data transmission may be used to improve a reception algorithm. For example, statistical characteristics of channels may be used to optimize designs and parameters of a channel estimator. In the NR system, such characteristics corresponding to the data transmission are represented by QCL information (QCL-Info).

It should be understood that one TCI state may include: a TCI state identification (ID), QCL information 1 and QCL information 2. Here, the QCL information 2 is optional. Further, a piece of QCL information may include a QCL type configuration and a QCL reference signal configuration. The QCL type configuration may be one of a QCL typeA, a QCL typeB, a QCL typeC, or a QCL typeD. The QCL reference signal configuration may be a cell ID, a bandwidth part (BWP) ID, and a reference signal identifier (ID) (e.g., a CSI-RS resource ID or an SSB index).

Herein, different QCL types are defined as follows. The QCL typeA is used to configure {a Doppler shift, a Doppler spread, an average delay, a delay spread}, the QCL typeB is used to configure {a Doppler shift, a Doppler spread}, the QCL typeC is used to configure {a Doppler shift, an average delay}, and the QCL typeD is used to configure {a spatial Rx parameter}.

Optionally, the network device may indicate a TCI state for a downlink signal (or called a downlink channel).

If the network device configures, according to the TCI state, an SSB 1 or a resource of CSI-RS 1 for the QCL reference signal of a target downlink signal (or a target downlink channel), and the QCL type is configured as the typeA, typeB, or typeC, then the terminal device may assume that a large-scale parameter of the target downlink signal is the same as or similar to a large-scale parameter of the SSB 1 or the resource of CSI-RS 1, and the large-scale parameter may be determined according to the QCL type configuration.

If the network device configures, according to the TCI state, an SSB 2 or a resource of CSI-RS 2 for the QCL reference signal of the target downlink signal (or the downlink channel), and the QCL type is configured as the typeD, then the terminal device may use the same spatial reception (Rx) parameter as that for receiving the SSB 2 or the resource of CSI-RS 2, to receive the target downlink signal. Typically, at the network device side, the target downlink signal (or the target downlink channel) is transmitted through the same TRP, the same panel or the same beam as that for transmitting the SSB 2 or the resource of CSI-RS 2.

It should be understood that, if two downlink signals (or downlink channels) are transmitted through different TRPs, different panels or different beams, then different TCI states may be configured typically.

For a downlink control channel (PDCCH), the TCI state may be indicated through radio resource control (RRC) signaling or a combination of the RRC signaling and the MAC signaling.

For a downlink data channel (such as the PDSCH), a set of TCI states may be indicated through the RRC signaling, and some of the TCI states may be activated through the MAC layer signaling. Finally, one or two TCI states may be indicated, from the activated TCI states, by a TCI state indication field in the DCI, which is used for the PDSCH scheduled by the DCI.

### 4. Unified TCI state

The above TCI states are only applicable to the downlink channels and the downlink signals, and there are many limitations when applied in the NR system. In order to provide a more unified uplink and downlink beam management mechanism for the NR system, the 3rd Generation Partnership Project (3GPP) organization proposed, based on the above technologies, a concept of a unified TCI state. Specifically, two modes of the unified TCI state are designed for the unified TCI state.

First mode: one type of TCI state is included. Such type of TCI state may be applicable to uplink and downlink channels and signal, and may be typically referred to as a joint TCI state.

Second mode: two types of TCI states are included: a downlink TCI state (DL TCI state) and an uplink TCI state (UL TCI state). Herein, the DL TCI state may be only applicable to a downlink channel and downlink signal, and the UL TCI state may be only applicable to an uplink channel and uplink signal. Such type of TCI state may be referred to as a separate TCI state. The network may configure only one type of such TCI states, e.g., configuring only the DL TCI state or the UL TCI state. Optionally, the network may further configure both the two types of such TCI states, e.g., configuring both the DL TCI state and the UL TCI state simultaneously.

It should be understood that the downlink channels (some PDCCHs and PDSCHs) and downlink signals (aperiodic CSI-RSs) may be indicated by using the same downlink transmitting beam. For example, the DL TCI state or the joint TCI state may be used to indicate the downlink transmitting beam.

An uplink channel (such as a physical uplink control channel (PUCCH) and a physical uplink shared channel (PUSCH)) and uplink signal (a channel sounding reference signals (SRS)) may be indicated by using the same uplink transmitting beam. For example, the UL TCI state or the joint TCI state may be used to indicate the uplink transmitting beam.

It should be understood that the unified TCI state may be indicated by using an RRC, and/or an MAC Control Element (MAC CE), and/or a DCI format 1_1/1_2 (with or without downlink scheduling information).

It should be noted that the unified TCI state may be applicable for the CA scenario, and the TCI state configuration and/or indication on a single CC may be applicable for the multiple different CCs.

As implied by the name of the unified TCI state, the term "unified" herein has many meanings. The first meaning of the term "unified" refers to the unification of the uplink beam indication mechanism and the downlink beam indication mechanism, because the TCI state in the NR standard of R15/R16 is only used for the downlink beam indication, and the spatial relationship information based signaling is used for the uplink beam indication. The second meaning of the term "unified" refers to the unification of beams among different channels. For example, under the configuration for the separate DL/UL TCI state, the UE considers that the (UE-specific) downlink PDCCH and the (UE-specific) PDSCH may be unified to be transmitted by using the same beam. In addition, the terminal device may transmit the uplink PUCCH and PUSCH by using the same beam. Under the configuration for the joint TCI state, the terminal device may consider that different uplink and downlink channels and signals have good beam symmetry, i.e., a symmetrical beam pair may be used for uplink and downlink communications.

In the current discussion of R18, for the sDCI-mTRP transmission mode, multiple TCI states are included in the DCI for indicating beam information for the PDSCHs transmitted by different TRPs, respectively. Here, the NW may add a new field in the DCI, to indicate one or more TCI states used by the terminal device.

Furthermore, for the mDCI-mTRP transmission mode, each TRP is responsible for updating/indicating the TCI state corresponding to the PDSCH transmitted by the TRP itself, without performing the TCI state indication across the TRPs.

### 5. CORESET

The CORESET is a resource set used to transmit downlink control information, which may also be referred to as a control resource area or a physical downlink control channel resource set. Each CORESET may be a set of resource element groups (REGs). The REG is a basic unit for allocation of physical resources through downlink control signaling, and is used to define the mapping from downlink control signaling to resource elements (REs).

Herein, the CORESET may include a time-frequency resource, for example, the time-frequency resource in the frequency domain may be a segment of bandwidth, one or more sub-bands, etc.; and the time-frequency resource in the time domain may be one or more symbols. One CORESET may include continuous or discontinuous resource units in the time-frequency domain, for example, the CORESET may include continuous resource blocks (RBs) or discontinuous RBs.

It should be noted that, when configuring the CORESET, the network device may configure one TCI state or a group of TCI states for each CORESET. The TCI state(s) may be used to indicate the relevant parameters required by the terminal device when performing demodulation and detection of a candidate PDCCH in the search space associated with the CORESET. When the network device configures a group of TCI states for a certain CORESET, the network device may activate a TCI state for the CORESET through the MAC CE signaling, to assist the terminal device in the demodulation of the PDCCH.

In addition, the network device may further configure a higher layer indication (i.e., CORESETpoolindex) for each CORESET, to indicate whether the CORESETs are for the same TRP. The range of the value is 0 and 1. For the CORESETs configured with the same CORESETpoolindex, the terminal device may determine that the data comes from the same TRP.

### 6. CC-related beam configuration

The CC may be referred to as a component carrier, a unit carrier, a constituent carrier, a member carrier, or the like. Each carrier in multi-carrier aggregation may be referred to as a "CC". The terminal device may receive data on a plurality of CCs. Each carrier is composed of one or more physical resource blocks (PRBs), and for each carrier, there is a respective PDCCH corresponding to the carrier, which schedules the PDSCH of the respective CC.

The terminal device may be configured to operate on a plurality of CCs, and each of the plurality of CCs may have an operational (or activated) BWP at the same time moment. In order to ensure the proper operation of each CC, the NW may perform relevant beam configuration for each BWP of each CC.

For example, for the PDSCH, the network device may configure a TCI state for the BWP of each CC of the terminal device through the RRC signaling. The network device may activate the TCI state for each BWP of each CC of the terminal device through the MAC CE signaling. Furthermore, the network device may indicate, through the TCI state indication field in the DCI, one or two TCI states for each BWP of each CC of the terminal device, from the activated TCI states, for the PDSCH scheduled by the DCI.

In the CA scenario, each CC may be configured for a transmission mode or dynamically adjusted for a transmission mode different from that of another CC. For example, the transmission mode may be the sTRP transmission mode, the sDCI-mTRP transmission mode, or the mDCI-mTRP transmission mode. In different transmission modes, the manners for configuring the beam information for the CCs may be different. In different transmission modes, the manners for configuring the beam information can be referred to in the aforementioned embodiments, which will not be elaborated herein again for brevity.

During the communication process, different CCs may be transmitted by using the same beam. However, there is currently no definite solution on how to configure the same beam information for different CCs, and how the terminal device to distinguish which TCI state indicated by the network device should be used for the CCs in different transmission modes.

For convenience of understanding the technical solutions of the embodiments of the present disclosure, the technical solutions in the present disclosure are described below through the detailed embodiments. The above related technologies, used as optional solutions, may be combined with the technical solutions of the embodiments of the present disclosure in various ways, and the combinations shall fall within the scope of the protection of the embodiments of the present disclosure. The embodiments of the present disclosure include at least part of the following contents.

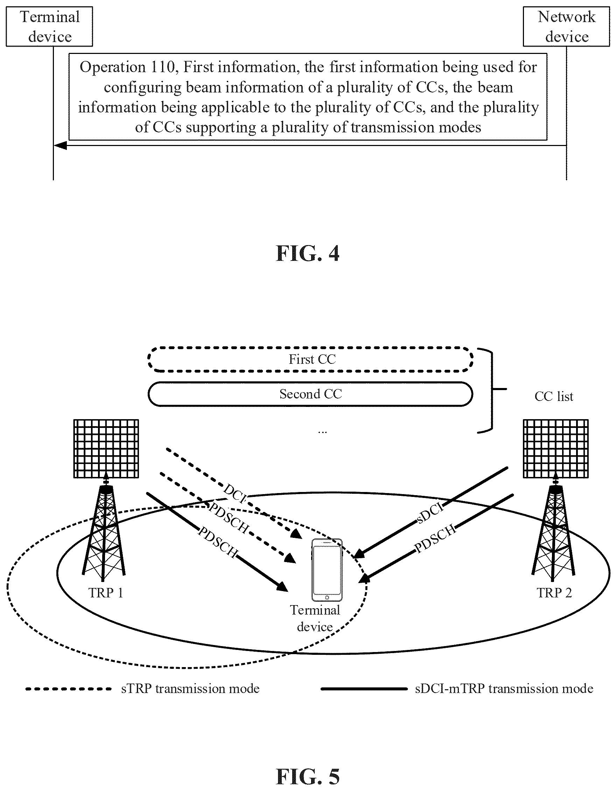

FIG. 4 is a schematic flowchart of a configuration method according to an embodiment of the present disclosure. As illustrated in FIG. 4, the configuration method includes the following operations.

At block 110a, a network device transmits first information.

At block 110b, a terminal device receives the first information. Here, the first information is used to configure beam information for a plurality of CCs, the beam information is applicable to the plurality of CCs, and the plurality of CCs support a plurality of transmission modes.

Optionally, the network device may transmit the first information to the terminal device, and accordingly, the terminal device may receive the first information from the network device.

Optionally, the first information may include one or more TCI states. Herein, the one or more TCI states may be the unified TCI state(s). For example, the one or more TCI states may be the joint TCI state(s) or DL TCI state(s), which is not limited in the embodiments of the present disclosure.

It should be understood that the network device may configure (or indicate), through the one or more TCI states in the first information, the beam information for the plurality of CCs of the terminal device. As such, the terminal device may determine, based on the one or more TCI states in the first information, the beam information for the plurality of CCs.

In the embodiments of the present disclosure, the beam information configured by the one or more TCI states in the first information may be applicable to the plurality of CCs. In other words, the plurality of CCs in the embodiments of the present disclosure may share the one or more TCI states in the first information. The beam information configured by the first information may be applicable to the plurality of CCs, which may be referred to as a common beam for the plurality of CCs.

Optionally, in the CA scenario, the network device may configure a CC list for the terminal device, and the CC list may include the plurality of CCs. That is, the above plurality of CCs may be the plurality of CCs in the CC list, and may be configured in one CC list. The plurality of CCs in the CC list may share the one or more TCI states in the first information.

In an embodiment of the present disclosure, the plurality of CCs may support a plurality of transmission modes. Optionally, the plurality of CCs may include one or more of: a first CC, a second CC and a third CC.

Herein, the first CC supports an sTRP transmission, the second CC supports an sDCI-mTRP transmission, and the third CC supports an mDCI-mTRP transmission.

It should be noted that there may be one or more first CCs, one or more second CCs, and one or more third CCs. That is, the first CC, the second CC, and the third CC are names of CCs in different transmission modes, which should not limit the scope of protection of the embodiments of the present disclosure.

The foregoing transmission mode may also be referred to as a TRP operation. It should be understood that different CCs in the plurality of CCs may support different TRP operations.

Optionally, the network device may configure a transmission mode/TRP operation for each CC among the plurality of CCs of the terminal device, and the network device may further dynamically adjust the transmission mode/TRP operation for each CC. That is, the plurality of CCs of the terminal device may be configured or dynamically adjusted for different transmission modes/TRP operations.

It should be understood that, in the embodiments of the present disclosure, the plurality of CCs may include CCs in the plurality of transmission modes/TRP operations, such as a CC supporting the sTRP transmission mode, a CC supporting the sDCI-mTRP transmission mode, and a CC supporting the mDCI-mTRP transmission mode.

In an embodiment of the present disclosure, a common beam indication method may be designed for the CCs in different transmission modes, that is, the CCs in different transmission modes may share the beam information. Specifically, the terminal device may determine, based on the first information transmitted by the network device, the beam information for the plurality of CCs in different transmission modes at once. In other words, the beam information for the plurality of CCs can be updated through the single signaling, which not only can reduce the signaling overhead, but also reduce the overhead and delay for the beam indication, thereby improving the performance of the communication system.

It should be particularly emphasized that the common beam shared by the CCs in different transmission modes refers that the CCs in different transmission modes may share the one or more TCI states configured/indicated by the network device through the first information. However, the beams used for the scheduled PDSCHs on different CCs each time may be different. For example, one TCI state may be used for the sTRP transmission, and two TCI states may be required to be used for the mTRP-mTRP transmission.

The following provides a detailed description of a method for determining the beam information for the CCs, among in the plurality of CCs, in different transmission modes through different scenarios.

In a first scenario, the plurality of CCs may include a first CC and a second CC. That is, the plurality of CCs sharing the common beam may include a CC supporting the sTRP transmission and a CC supporting the sDCI-mTRP transmission. In other words, in the first scenario, the common beam may be shared by the CC supporting the sTRP transmission and the CC supporting the sDCI-mTRP transmission.

Exemplarily, FIG. 5 illustrates a schematic diagram of a scenario in which the common beam is shared by the first CC and the second CC. N CCs may be configured in a CC list, and the CC list may include one or more first CCs and one or more second CCs. The CCs in the CC list may share the TCI state(s) indicated by the network. Herein, the first CC supports the sTRP transmission mode, i.e., a channel (such as a PDSCH/PUCCH/PUSCH) transmitted by one TRP may be scheduled by a single piece of DCI. The second CC supports the sDCI-mTRP transmission mode, i.e., channels (such as PDSCHs/PUCCHs/PUSCHs) transmitted by two TRPs may be scheduled by a single piece of DCI.

In an embodiment of the present disclosure, in the aforementioned first scenario, the first information may include one or more TCI states. Here, the one or more TCI states may be indicated by the same TRP, and the beam information for the plurality of CCs may be determined based on the one or more TCI states, or a default TCI state.

It should be noted that, in a case where the network device configures the one or more TCI states for the plurality of CCs by the first information, after a beam application time has elapsed, the terminal device may apply the one or more TCI states configured by the first information to all CCs in the CC list.

In the first scenario where the common beam is shared by the first CC supporting the sTRP transmission and the second CC supporting the sDCI-mTRP transmission, the network device may configure the beam information in two different manners. Here, in a first manner for configuring the beam information, the network device may indicate one TCI state by using the RRC signaling and/or the MAC CE signaling and/or the DCI on the first CC supporting the sTRP transmission mode. The TCI state may be indicated by a target TRP which is one of a plurality of TRPs, and the target TRP may be the TRP for scheduling a channel/signal relevant to the transmission. The above TCI state configured in the first information may be also applicable to the second CC supporting the sDCI-mTRP transmission mode.

In a second manner for configuring the beam information, the network device may indicate a plurality of TCI states by using the RRC and/or the MAC CE and/or the DCI on the second CC supporting the sDCI-mTRP transmission mode. The plurality of TCI states may be indicated by any of the plurality of TRPs. Herein, the network device may dynamically adjust which TRP to be used to indicate the plurality of TCI states. The plurality of TCI states may be also applicable to the first CC supporting the sTRP transmission mode.

Optionally, the first information may be carried in one or more of the RRC signaling, the MAC CE signaling, and the DCI described above.

In a possible implementation, the network device may configure the beam information for the plurality of CCs only by the first information (i.e., without combining second information or third information described in the following embodiments). In such situation, the beam information for the plurality of CCs (i.e., the first CC and the second CC) may be determined based on the TCI state(s) in the first information, or may be determined based on the default TCI state.

Optionally, based on the TCI state(s) in the first information or the default TCI state, the terminal device may determine the beam information for the plurality of CCs to be predefined or configured by the network device. That is, the TCI state(s) actually used by the terminal device to determine the beam information for the plurality of CCs may be predefined by a protocol or configured by the network device.

Exemplarily, the protocol may predefine that the terminal device determines the beam information for the plurality of CCs based on the firstly indicated TCI state in the DCI (regardless of one TCI state or a plurality of TCI states being indicated in the DCI). Optionally, the network device may configure that the terminal device determines the beam information for the plurality of CCs based on the firstly indicated TCI state in the DCI (regardless of one TCI state or a plurality of TCI states being indicated in the DCI). Optionally, the protocol may predefine that the terminal device determines the beam information for the plurality of CCs based on the default TCI state. Optionally, the network device may configure that the terminal device determines the beam information for the plurality of CCs based on the default TCI state.

Optionally, in such implementation, the first information may be carried through one piece of DCI. The DCI may be with a DCI format 1_0 (i.e., fallback DCI independent of an RRC configuration) or a DCI format 1_1/1_2. It should be noted that, in the implementation, the above DCI may only include an existing indication field, but not include a newly-added indication field.

In another possible implementation, when the first information includes a plurality of TCI states, the configuration method provided in the embodiments of the present disclosure may further include the following operation.

The terminal device may receive second information, where the second information is used to indicate that beam information for at least part of the plurality of CCs is determined based on a first target TCI state, and the first target TCI state includes part or all of the plurality of TCI states in the first information.

It should be understood that, when the first information includes the plurality of TCI states, the second information may be used to indicate which TCI state(s) to be used by each of the plurality of CCs that share the common beam. That is, the second information may indicate which TCI state(s) in the first information to be used for determining the beam information for each of the plurality of CCs.

Optionally, the first information and the second information may be carried through different signaling; or, the first information and the second information may be carried through the same signaling, which is not limited in the embodiments of the present disclosure.

Optionally, both the first information and the second information may be carried through the DCI. It should be noted that a newly-added indication field in the DCI may be introduced by the network device, and the newly-added indication field may carry the second information. The newly-added indication field may be an indication field that has been agreed to be newly added in the downlink scheduling DCI in the current 3GPP standard protocol. Exemplarily, the newly-added indication field may be referred to as ApplyIndicatedTCIState.

It should be noted that the newly-added indication field in the DCI may be closely associated with the each scheduling of the PDSCH, and each scheduling may be dynamically notified to the terminal device.

Optionally, the number of the plurality of TCI states configured by the first information may be 2, that is, the plurality of TCI states may include a first TCI state and a second TCI state. In a case where the plurality of TCI states include the first TCI state and the second TCI state, the second information may be specifically indicated in the following manners.

When a value of the second information is a first value, the first target TCI state may be the first TCI state, and the second information may be used to indicate that beam information for the first CC is determined based on the first TCI state.

When the value of the second information is a second value, the first target TCI state may be the second TCI state, and the second information may be used to indicate that the beam information for the first CC is determined based on the second TCI state.

When the value of the second information is a third value, the first target TCI state may be the first TCI state and the second TCI state, and the second information may be used to indicate that the beam information for the second CC is determined based on the first TCI state and the second TCI state.

When the value of the second information is a fourth value, the first target TCI state may be the default TCI state.

Optionally, in the case where the plurality of TCI states include the first TCI state and the second TCI state, a length of the second information may be 2 bits. Accordingly, the value (which may also be referred to as an indication codepoint) of the second information may include 00, 01, 10 and 11. One of the first value, the second value, the third value and the fourth value may be one of the aforementioned four values. For example, the first value is 00, the second value is 01, the third value is 10, and the fourth value is 11; or, the first value is 11, the second value is 10, the third value is 01, and the fourth value is 00, etc., which are not limited in the embodiments of the present disclosure.

It should be understood that, when the number of the plurality of TCI states is 2, the number of TRPs in the network may be 2, correspondingly. For example, the TRPs in the network may include a first TRP and a second TRP. The first TRP and the second TRP may correspond to the first state and second TCI state, respectively.

Herein, when the value of the second information is the first value, the terminal device may be indicated to perform the transmission by using the first TCI state. That is, the terminal device may perform the sTRP transmission on the first CC; specifically, the terminal device may transmit a relevant channel/signal on the first CC through the first TRP of the foregoing two TRPs.

When the value of the second information is the second value, the terminal device may be indicated to perform the transmission by using the second TCI state. Similarly, the terminal device may perform the sTRP transmission on the first CC; specifically, the terminal device may transmit the relevant channel/signal on the first CC through the second TRP of the foregoing two TRPs.

When the value of the second information is the third value, the terminal device may be indicated to use the first TCI state and the second TCI state. That is, the terminal device may perform the sDCI-mTRP transmission on the second CC; specifically, the terminal device may transmit the relevant channel/signal on the second CC through the first TRP and the second TRP.

When the value of the second information is the fourth value, the terminal device may perform the transmission following the default beam. That is, the beam information for the first CC and the second CC may be determined based on the default TCI state. The default TCI state may be specifically described in the following embodiments.

Optionally, the relevant channel/signal may include one or more of a PDSCH, a PUCCH, a PUSCH, a CSI-RS, and the like.

It should be noted that, in the embodiments of the present disclosure, the first TCI state may be the firstly indicated TCI state of the plurality of TCI states that are indicated in the DCI, and the second TCI state may be the secondly indicated TCI state of the plurality of TCI states that are indicated in the DCI. Optionally, the first TCI state may be the secondly indicated TCI state of the plurality of TCI states that are indicated in the DCI, and the second TCI state may be the firstly indicated TCI state of the plurality of TCI states that are indicated in the DCI.

Exemplarily, in the architecture illustrated in FIG. 5, the network device may schedule the PDSCH transmission through the sDCI. The sDCI may include the firstly indicated TCI state and the secondly indicated TCI state, and the sDCI may further include an ApplyIndicatedTCIState indication field (corresponding to the second information in the aforementioned embodiments). In practical applications, the terminal device may determine the TCI state used by the first CC and the second CC that share the common beam, based on a correspondence relationship between the codepoint value of the ApplyIndicatedTCIState indication field and the behavior of the terminal device shown in Table 1.

**TABLE 1**

| Codepoint value of ApplyIndicatedTCIState | Behavior of the terminal device |
|---|---|
| 00 | Using the firstly indicated TCI state |
| 01 | Using the secondly indicated TCI state |
| 10 | Using the firstly indicated TCI state and the secondly indicated TCI state |
| 11 | Using the default TCI state |

Herein, with reference to FIG. 5, when the codepoint value of the ApplylndicatedTCIState in the sDCI is "00", the terminal device may use the firstly indicated TCI state in the sDCI. That is, the terminal device may perform the sTRP transmission on the first CC; in such situation, the terminal device may receive the PDSCH from the TRP1. When the codepoint value of the ApplyIndicatedTCIState is "01", the terminal device may use the secondly indicated TCI state in the sDCI. That is, the terminal device may also perform the sTRP transmission on the first CC; in such situation, the terminal device may receive the PDSCH from the TRP2. When the codepoint value of the ApplyIndicatedTCIState is "10", the terminal device may use both the firstly indicated TCI state and the secondly indicated TCI state in the sDCI. That is, the terminal device may perform the sDCI-mTRP transmission on the second CC; in such situation, the terminal device may receive the PDSCHs from the TRP1 and the TRP2, respectively. Finally, when the codepoint value of the ApplyIndicatedTCIState is "11", the terminal device may use the default TCI state. The default TCI state may be specifically described in the following embodiments.

In yet another possible implementation, when the first information includes one TCI state, the configuration method provided in the embodiments of the present disclosure may further include the following operation.

The terminal device may receive third information, where the third information is used to indicate that the beam information for the plurality of CCs is determined based on a second target TCI state, the second target TCI state includes at least one of a TCI state in the first information or a specified TCI state, and the specified TCI state is a TCI state used by the terminal device before receiving the first information.

It should be understood that, when the first information only includes one TCI state, the third information may be used to indicate the TCI state specifically used by each of the plurality of CCs that share the common beam. That is, the third information may indicate whether the beam information for each of the plurality of CCs is determined based on the TCI state configured in the first information or the TCI state that is previously applicable.

It should be noted that the terminal device may store the TCI state that is applicable before receiving the first information. When the network device configures one TCI state by the first information, the beam information for the first CC and the second CC may be determined based on the TCI state configured in the first information and the TCI state that is previously applicable to the terminal device.

Optionally, the first information and the third information may be carried through different signaling; or, the first information and the third information may be carried through the same signaling, which is not limited in the embodiments of the present disclosure.

Optionally, both the first information and the third information may be carried through the DCI.

It should be noted that the third information in the embodiment and the second information in the aforementioned embodiments may be the same information. For example, a newly-added indication field in the DCI may be introduced by the network device, and the newly-added indication field may carry the third information. The newly-added indication field may be an indication field that has been agreed to be newly added in the downlink scheduling DCI in the current 3GPP standard protocol. Exemplarily, the newly-added indication field may be referred to as ApplyIndicatedTCIState.

Optionally, in a case that only one TCI state is configured by the first information, the third information may be specifically indicated in the following manners.

When a value of the third information is a first value, the second target TCI state may be the TCI state configured by the first information, and the third information may be used to indicate that beam information for the first CC is determined based on the TCI state configured by the first information.

When the value of the third information is a second value, the second target TCI state may be the specified TCI state, and the third information may be used to indicate that the beam information for the first CC is determined based on the specified TCI state.

When the value of the third information is a third value, the second target TCI state may be the TCI state configured by the first information and the specified TCI state, and the third information may be used to indicate that the beam information for the second CC is determined based on the TCI state configured by the first information and the specified TCI state.

When the value of the third information is a fourth value, the second target TCI state may be the default TCI state.

Optionally, a length of the third information may be 2 bits. Accordingly, the value (which may also be referred to as an indication codepoint) of the third information may include 00, 01, 10 and 11. The first value, the second value, the third value and the fourth value may be one of the aforementioned four values. For example, the first value is 00, the second value is 01, the third value is 10, and the fourth value is 11; or, the first value is 11, the second value is 10, the third value is 01, and the fourth value is 00, etc., which are not limited in the embodiments of the present disclosure.

Herein, when the value of the third information is the first value, the terminal device may be indicated to perform the transmission by using the TCI state configured by the first information. That is, the terminal device may perform the sTRP transmission on the first CC; specifically, the terminal device may transmit the relevant channel/signal on the first CC through the first TRP of the foregoing two TRPs.

When the value of the third information is the second value, the terminal device may be indicated to perform the transmission by using the TCI state that is previously applicable. Similarly, the terminal device may perform the sTRP transmission on the first CC; specifically, the terminal device may transmit the relevant channel/signal on the first CC through the second TRP of the foregoing two TRPs.

When the value of the third information is the third value, the terminal device may be indicated to use the TCI state configured by the first information and the TCI state that is previously applicable. That is, the terminal device may perform the sDCI-mTRP transmission on the second CC; specifically, the terminal device may transmit the relevant channel/signal on the second CC through the first TRP and the second TRP.

When the value of the third information is the fourth value, the terminal device may perform the transmission following the default beam, and the default beam may be determined according to the default TCI state. That is, the beam information for the first CC and the second CC may be determined according to the default TCI state. The default TCI state may be specifically described in the following embodiments.

Optionally, the relevant channel/signal may include one or more of a PDSCH, a PUCCH, a PUSCH, a CSI-RS, and the like.

Exemplarily, in the architecture illustrated in FIG. 5, the network device may schedule the PDSCH transmission through the DCI. The DCI may include the firstly indicated TCI state, and the DCI may further include an ApplyIndicatedTCIState indication field (corresponding to the third information). The terminal device may have a different interpretation of the ApplyIndicatedTCIState indication field in the DCI compared to that in Table 1. Specifically, the terminal device may determine the TCI states used by the first CC and the second CC that share the common beam, based on a correspondence relationship between the codepoint value of the ApplyIndicatedTCIState indication field and the behavior of the terminal device shown in Table 2.

**TABLE 2**

| Codepoint value of ApplyIndicatedTCIState | Behavior of the terminal device |
|---|---|
| 00 | Using the firstly indicated TCI state |
| 01 | Using the TCI state that is previously applicable |
| 10 | Using the firstly indicated TCI state and the TCI state that is previously applicable |
| 11 | Using the default TCI state |

Herein, with reference to FIG. 5, when the codepoint value of the ApplyIndicatedTCIState in the DCI is "00", the terminal device may use the firstly indicated TCI state in the DCI. That is, the terminal device may perform the sTRP transmission on the first CC; in such situation, the terminal device may receive the PDSCH from the TRP1. When the codepoint value of the ApplyIndicatedTCIState is "01", the terminal device may use the TCI state that is previously applicable, the terminal device may also perform the sTRP transmission on the first CC; in such situation, the terminal device may receive the PDSCH from the TRP2. When the codepoint value of the ApplyIndicatedTCIState is "10", the terminal device may use both the firstly indicated TCI state in the DCI and the TCI state that is previously applicable to the terminal device. That is, the terminal device may perform the sDCI-mTRP transmission on the second CC; in such situation, the terminal device may receive the PDSCHs from the TRP1 and the TRP2, respectively. Finally, when the codepoint value of the ApplyIndicatedTCIState is "11", the terminal device may use the default TCI state. The default TCI state may be specifically described in the following embodiments.

Optionally, the default TCI state in the aforementioned embodiments may include one or more of:
a TCI state corresponding to a first CORESET, where the first CORESET is a CORESET at which DCI carrying the first information is located;
a TCI state corresponding to a second CORESET, where the second CORESET is a CORESET, identified as a first specified identifier, among one or more CORESETs monitored by the terminal device within a third time unit;
a TCI state configured by a network device;
a predefined TCI state; and
a TCI state, among one or more TCI states activated by an MAC CE, with a specified codepoint.

In some embodiments, the first information may be carried through the DCI, which may be a scheduling DCI used for scheduling the PDSCH/PUCCH/PUSCH transmission. The default TCI state may be one or more activated TCI states for the CORESET at which the DCI carrying the first information is located.

It should be noted that the first CORESET may support the sTRP transmission mode, that is, the first CORESET may be configured with one activated TCI state. Additionally, the first CORESET may further support the mTRP transmission mode, that is, the first CORESET may be configured with two or more activated TCI states.

In some embodiments, the default TCI state may be the TCI state corresponding to the CORESET, identified as the first specified identifier, among one or more CORESETs monitored by the terminal device within the third time unit.

Optionally, the third time unit may be the most recent time unit of the PDSCH currently scheduled for the terminal device. The time unit may be a slot, a mini slot, a symbol set, or the like, which is not limited in the embodiments of the present disclosure.

Optionally, the first specified identifier may be the largest identifier, the smallest identifier, the second largest identifier, or the second smallest identifier among the plurality of identifiers, which is not limited in the embodiments of the present disclosure.

Exemplarily, the second CORESET may be the CORESET with the lowest CORESET ID among the plurality of CORESETs detected in the most recent slot of the PDSCH currently scheduled for the terminal device. That is, the default TCI state may be one or more activated TCI states corresponding to the CORESET with the lowest CORESET ID among the plurality of CORESETs detected in the most recent slot of the currently scheduled PDSCH.

It should be noted that the second CORESET may support the sTRP transmission mode, that is, the second CORESET may be configured with one activated TCI state. Additionally, the second CORESET may further support the mTRP transmission mode, that is, the second CORESET may be configured with two or more activated TCI states.

In some embodiments, the network device may pre-configure one or more default TCI states through the signaling. Exemplarily, the network device may configure the default TCI state as the firstly indicated TCI state in the DCI, the secondly indicated TCI state in the DCI, or the firstly indicated TCI state and the secondly indicated TCI state in the DCI, which is not limited in the embodiments of the present disclosure.

In some embodiments, the default beam may be predefined. That is, the default beam may be with one or more TCI states specified in the protocol. Exemplarily, the predefined default TCI state may be the firstly indicated TCI state in the DCI, the secondly indicated TCI state in the DCI, or the firstly indicated TCI state and the secondly indicated TCI state in the DCI, which is not limited in the embodiments of the present disclosure.

In some embodiments, the default TCI state may be the TCI state, among one or more TCI states activated by the MAC CE, with the specified codepoint. The specified codepoint may be the lowest codepoint, the highest codepoint, the second highest codepoint, or the second lowest codepoint among the plurality of codepoints. The embodiments of the present disclosure are not limited thereto.

In a second scenario, the plurality of CCs may include a first CC and a third CC. Herein, the first CC supports the sTRP transmission, and the third CC supports the mDCI-mTRP transmission. That is, the plurality of CCs sharing the common beam may include a CC supporting the sTRP transmission and a CC supporting the mDCI-mTRP transmission. In other words, in the second scenario, the common beam may be shared by the CC supporting the sTRP transmission and the CC supporting the mDCI-mTRP transmission.

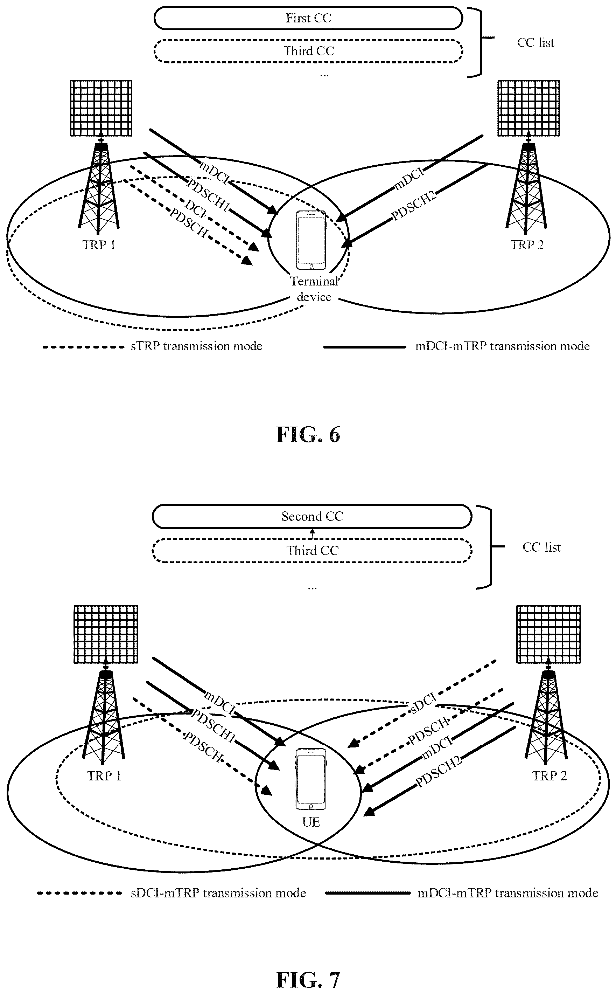

Exemplarily, FIG. 6 illustrates a schematic diagram of a scenario in which the common beam is shared by the first CC and the third CC. Taking the number of the TRPs in the network being 2 as an example, N CCs may be configured in a CC list, and the CC list may include one or more first CCs and one or more third CCs. The CCs in the CC list may share the TCI state(s) indicated by the network. Herein, the first CC supports the sTRP transmission mode, i.e., a channel (such as a PDSCH/PUCCH/PUSCH) transmitted by one TRP may be scheduled by a single piece of DCI. The third CC supports the mDCI-mTRP transmission mode, i.e., channels (such as PDSCHs/PUCCHs/PUSCHs) transmitted by two TRPs may be respectively scheduled by two pieces of DCI.

In an embodiment of the present disclosure, in the aforementioned second scenario, the first information may include one or more TCI states. Here, in a case where the first information includes a plurality of TCI states, the plurality of TCI states may be indicated by a plurality of TRPs; and beam information for the CC that is associated with the same TRP, among the plurality of CCs, may be determined based on the TCI state indicated by this TRP.

It should be noted that there may be an association relationship between the CCs and the TRPs. The first CC supporting the sTRP transmission may be associated with a TRP, and the network device may transmit, through the TRP associated with the first CC, the relevant channel/signal on the first CC. The third CC supporting the mDCI-mTRP transmission may be associated with the plurality of TRPs, and the network device may transmit, through the plurality of TRPs associated with the third CC, the relevant channel/signal on the third CC.

In the second scenario where the common beam is shared by the first CC supporting the sTRP transmission mode and the third CC supporting the mDCI-mTRP transmission mode, the network device may configure the beam information in two different manners. Here, in a first manner for configuring the beam information, the network device may indicate one TCI state by using the RRC signaling and/or the MAC CE signaling and/or the DCI on the first CC supporting the sTRP transmission mode.

It should be noted that, in the aforementioned first manner for configuration, the first information may be carried in one or more of the RRC signaling, the MAC CE signaling, and the DCI described above.

In addition, in a second manner for configuring the beam information, on the third CC supporting the mDCI-mTRP transmission mode, the network device may indicate a dedicated TCI state for each of the plurality of TRPs through a respective one of a plurality of pieces of DCI. The plurality of TCI states may be indicated by the plurality of TRPs, respectively. It should be understood that, when the first information includes the plurality of TCI states, the first information may be carried through the plurality of pieces of DCI.

It should be noted that, in the aforementioned second manner for configuration, the plurality of TCI states in the first information may be carried through the plurality of pieces of DCI transmitted by the plurality of TRPs, that is, each piece of DCI may carry a respective TCI state. When the network device uses, on the third CC supporting the mDCI-mTRP transmission mode, the plurality of pieces of DCI to indicate the TCI state for each of the TRPs, the TCI state may be only applicable to the respective TRP on the third CC supporting the mDCI-mTRP transmission mode, and may not be indicated across TRPs.

It should also be noted that, in the second scenario, each TRP may be configured with a dedicated TCI state, and therefore, there is no need for the newly-added indication field in the DCI.

In an embodiment of the present disclosure, the network device may transmit, on the first CC supporting the sTRP transmission mode, the relevant channel/signal through one TRP, and further transmit, on the third CC supporting the mDCI-mTRP transmission mode, the relevant channel/signal through the plurality of TRPs. In an embodiment of the present disclosure, for the first CC supporting the sTRP transmission mode and the third CC supporting the mDCI-mTRP transmission mode, the CCs using the same TRP may share the TCI state indicated by the network device for this TRP.

Exemplarily, with reference to FIG. 6, the first CC may be associated with the TRP1, and the network device may transmit the DCI on the first CC through the TRP1, to schedule the PDSCH. The third CC may be associated with the TRP1 and the TRP2, and the network device may transmit the mDCI on the third CC through the TRP1 and the TRP2, respectively, to schedule the PDSCH for the TRP1 and the PDSCH for the TRP2 through the mDCI transmitted by the TRP1 and the mDCI transmitted by the TRP2, respectively. It can be understood that both the first CC and the third CC are associated with the TRP1. Therefore, for the TRP1, the beam information for the first CC and the third CC may be determined according to the TCI state indicated by the TRP1. In other words, for the TRP1, the first CC and the third CC may share the TCI state indicated by the network device for the TRP1.

It should be noted that, in the second scenario, for the plurality of CCs, the TCI state may not be indicated across the TRPs. In addition, the network device may configure a reference TCI state pool on a certain CC/BWP, and the reference TCI state pool may be used as a reference for other CCs/BWPs (which are not configured with the TCI state). When the DCI is included in the CORESET of a certain TRP, the TCI state on the reference CC/BWP may be indicated during the PDSCH or PUSCH scheduling.

Optionally, for each of the plurality of CCs, the TRP associated with the CC may be determined based on an index value of a CORESET group configured for the CC. The CORESET groups corresponding to the plurality of CCs associated with the same TRP may have the same index value.

In practical applications, for the first CC supporting the sTRP transmission mode or the third CC supporting the mDCI-mTRP transmission mode, the TRP associated with each of the plurality of CCs may be configured with an index value (CORESETPoolIndex) of a CORESET group, and the terminal device may distinguish the TRPs of the CCs sharing the common beam based on the CORESETPoolIndex.

Exemplarily, as illustrated in FIG. 6, in a case that the number of TRPs is 2, the network device may configure the CORESETPoolIndex for one or more CORESETs of each TRP, and the value of the CORESETPoolIndex is "0" or "1". For the first CC supporting the sTRP transmission mode, the network device may configure the CORESETPoolIndex of one or more CORESETs of the first CC as "0" (the default value is 0 if not configured), or may configure the CORESETPoolIndex of the one or more CORESETs of the first CC as "1".

It should be understood that the TRPs with the same value of CORESETPoolIndex may be considered to be the same TRP. In an embodiment of the present disclosure, for the relevant channel/signal transmitted by the TRPs with the same value of CORESETPoolIndex, the plurality of CCs may share the TCI state indicated by the network device for such TRPs.

It should be noted that the aforementioned common beam configuration manner(s) may further be applicable to the case that the common beam is shared by one CC supporting the mDCI-mTRP transmission mode and another CC supporting the mDCI-mTRP transmission mode. That is, in the above case that the plurality of CCs include the plurality of third CCs, when the common beam is shared by one third CC supporting the mDCI-mTRP transmission mode and another third CC supporting the mDCI-mTRP transmission mode, for the relevant channel/signal transmitted by the same TRP, the plurality of third CCs may share the TCI state indicated by the network device for the TRP.

In a third scenario, the plurality of CCs may include a second CC and a third CC. The second CC supports the sDCI-mTRP transmission, and the third CC supports the mDCI-mTRP transmission. That is, the plurality of CCs that share the common beam may include a CC supporting the sTRP-mTRP transmission and a CC supporting the mDCI-mTRP transmission. In other words, in the third scenario, the common beam may be shared by the CC supporting the sDCI-mTRP transmission and the CC supporting the mDCI-mTRP transmission.

Exemplarily, FIG. 7 illustrates a schematic diagram of a scenario in which the common beam is shared by the second CC and the third CC. Taking the number of the TRPs in the network being 2 as an example, N CCs may be configured in a CC list, and the CC list may include one or more second CCs and one or more third CCs. The CCs in the CC list may share the TCI state(s) indicated by the network. Herein, the second CC supports the sDCI-mTRP transmission mode, i.e., channels (such as PDSCHs/PUCCHs/PUSCHs) transmitted by two TRPs may be scheduled by a single piece of DCI. The third CC supports the mDCI-mTRP transmission mode, i.e., channels (such as PDSCHs/PUCCHs/PUSCHs) transmitted by two TRPs may be respectively scheduled by two pieces of DCI.

It should be noted that, in the third scenario, the first CC supporting the sTRP transmission mode may be also included, and there may be one or more first CCs. Since the value of the CORESETPoolIndex of one or more CORESETs of the first CC supporting the sTRP transmission mode is either "0" or "1", the TRP associated with the first CC may be considered as one TRP in the mDCI-mTRP transmission mode.

It should be understood that, in the sDCI-mTRP transmission mode, the network device may use the RRC and/or the MAC CE and/or the DCI to indicate one or more TCI states, and may further use the newly-added indication field (ApplyIndicatedTCIState) in the DCI, to indicate which indicated TCI state should be used by the terminal device.

In the mDCI-mTRP transmission mode, the newly-added indication field (ApplyIndicatedTCIState) is not introduced in the DCI, and the network device may use a TRP-dedicated manner to indicate the TCI state for TRPs with the same value of CORESETPoolIndex in the DCI. According to the value of the CORESETPoolIndex, the common beam configuration may be performed in the multi-CC scenario.

When such two mTRP operations are fused into the CA, in the two different beam indication mechanisms described above, the common beam operation may independently performed among multiple CCs.

It should be understood that, in the third scenario where the common beam is shared by the second CC supporting the sTRP-mTRP transmission mode and the third CC supporting the mDCI-mTRP transmission mode, the network device may configure the beam information in two different manners. Here, in a first manner for configuring the beam information, on the third CC supporting the mDCI-mTRP transmission mode, the network device may indicate a dedicated TCI state for each of the plurality of TRPs through a respective one of a plurality of pieces of DCI. The plurality of TCI states may be indicated by the plurality of TRPs, respectively. Herein, when the first information includes a plurality of TCI states, the first information may be carried through the plurality of pieces of DCI.

It should be noted that, in the aforementioned first configuring manner, the plurality of TCI states in the first information may be carried through the plurality of pieces of DCI transmitted by the plurality of TRPs, that is, each piece of DCI may carry a respective TCI state. When the network device uses, on the third CC supporting the mDCI-mTRP transmission mode, the plurality of pieces of DCI to indicate the TCI state for each of the TRPs, the TCI state may be only applicable to the respective TRP on the third CC supporting the mDCI-mTRP transmission mode, and may not be indicated across TRPs.

In a second manner for configuring the beam information, the network device may indicate one or more TCI states through the RRC and/or the MAC CE and/or the DCI on the second CC supporting the sDCI-mTRP transmission mode. The plurality of TCI states may be indicated by any of the plurality of TRPs. Herein, the network device may dynamically adjust which TRP to be used to indicate the plurality of TCI states.

It should be noted that, in the above second configuring manner, the first information may be carried in one or more of the aforementioned RRC signaling, MAC CE signaling, and DCI.

In a possible implementation, for the first manner for configuring the beam information described above, the first information may include a plurality of TCI states, and the plurality of TCI states may be indicated by a plurality of TRPs. In such situation, the beam information for the third CC may be determined based on the TCI state indicated by the TRP associated with the third CC. The beam information for the second CC may be determined based on the first TCI state and the second TCI state, and the first TCI state and the second TCI state may be associated with the TCI states indicated by different TRPs.

It should be understood that, when the network device uses, on the third CC supporting the mDCI-mTRP transmission mode, the plurality of pieces of DCI to indicate the TCI state for each of the TRPs, the TCI state may be only applicable to the respective TRP on the third CC, and may not be indicated across TRPs. Accordingly, on the second CC supporting the sDCI-mTRP transmission mode, the network device may indicate the first TCI state and the second TCI state by using a piece of DCI.

When such two mTRP operations are fused into the CA, the dedicated TCI states for the plurality of TRPs in the mDCI-mTRP transmission mode may be respectively associated with the first TCI state and the second TCI state indicated by the DCI in the sDCI-mTRP transmission mode.

Exemplarily, the TCI state for the TRP1 in the mDCI-mTRP transmission mode may correspond to the first TCI state in the sDCI-mTRP transmission mode; and the TCI state for the TRP2 in the mDCI-mTRP transmission mode may correspond to the second TCI state in the sDCI-mTRP transmission mode. Optionally, the TCI state for the TRP1 in the mDCI-mTRP transmission mode may correspond to the second TCI state in the sDCI-mTRP transmission mode; and the TCI state for the TRP2 in the mDCI-mTRP transmission mode may correspond to the first TCI state in the sDCI-mTRP transmission mode, which is not limited in the embodiments of the present disclosure.

It should be noted that, in an embodiment of the present disclosure, the CORESETPoolIndex configured by the network device for the CORESET of each TRP may be used to identify different TRPs.

In other words, the foregoing association relationship may be the following. In the mDCI-mTRP transmission mode, the TCI state indicated by the DCI in the CORESET with the CORESETPoolIndex of "0" may correspond to the first TCI state in the sDCI-mTRP transmission mode; and the TCI state indicated by the DCI in the CORESET with the CORESETPoolIndex of "1" may correspond to the second TCI state in the sDCI-mTRP transmission mode.

It should be noted that the association relationship between the dedicated TCI states for the plurality of TRPs in the mDCI-mTRP transmission mode and the first and second TCI states indicated by the DCI in the sDCI-mTRP transmission mode may be predefined or configured by the network device, which is not limited in the embodiments of the present disclosure.

In another possible implementation, for the second manner for configuring the beam described above, the first information may include one or more TCI states. Here, in a case where the first information includes a plurality of TCI states, the plurality of TCI states may be indicated by the same TRP. In such situation, the beam information for the second CC may be determined based on the one or more TCI states in the first information, and the one or more TCI states may be associated with one or more TRPs. The beam information for the third CC may be determined based on the TCI state associated with the TRP that is associated with the third CC.

In an embodiment of the present disclosure, on the second CC supporting the sDCI-mTRP transmission mode, the network device may use the RRC signaling and/or the MAC CE signaling and/or the DCI, to indicate the one or more TCI states. The plurality of TCI states may be indicated by any one of the plurality of TRPs. Herein, the network device may dynamically adjust which TRP to be used to indicate the plurality of TCI states.

Herein, the first information may be carried in one or more of the aforementioned RRC signaling, MAC CE signaling, and DCI.

Optionally, in a case where the network device configures only one TCI state by the first information, the TCI state may be associated with one TRP in the mDCI-mTRP transmission mode. The TCI state may indicate the TCI state for the associated TRP.

Exemplarily, one TCI state configured in the first information may be associated with a TRP in the mDCI-mTRP transmission mode, where the value of the CORESETPoolIndex is "0" or "1". When one TCI state is configured by the first information on the second CC, the TCI state in the mDCI-mTRP transmission mode may be indicated.

Optionally, when the network device configures a plurality of TCI states by the first information, the plurality of TCI states configured in the first information may be associated with a plurality of TRPs in the mDCI-mTRP transmission mode, respectively. The TCI states in the first information may indicate the TCI states for the associated TRPs.

Exemplarily, the network device configures the first TCI state and the second TCI state by the first information, and the first TCI state and the second TCI state in the first information may be associated with two TRPs with two CORESETPoolIndex of "0" and "1", respectively. For example, the first TCI state configured by the first information in the sDCI-mTRP transmission mode may be associated with the TRP with the CORESETPoolIndex of "0" in the mDCI-mTRP transmission mode. The second TCI state configured by the first information in the sDCI-mTRP transmission mode may be associated with the TRP with the CORESETPoolIndex of "1" in the mDCI-mTRP transmission mode.

It should be noted that the aforementioned association relationship may be applied across the plurality of CCs. The aforementioned association relationship may be predefined or configured by the network, which is not limited in the embodiments of the present disclosure.

Optionally, according to the above embodiments, in an embodiment of the present disclosure, when a time interval between a first time unit for transmitting the first information and a second time unit is less than a first threshold, and the second time unit is a time unit for transmitting a channel or a signal based on beam information configured by the first information, the channel or the signal may be transmitted by the terminal device based on beam information indicated by a default TCI state.

It should be understood that, in the time domain, if the interval between the first time unit, in which the terminal device receives the first information for configuring the beam information, and the second time unit, in which the relevant channel/signal is transmitted based on the beam information, is less than the first threshold, the terminal device may not have enough time to switch to the beam configured by the first information to receive the above relevant channel/signal. For example, the terminal device may not have enough time to switch from one TCI state to two TCI states. In such situation, the terminal device may use the default beam to transmit the relevant channel. The default beam may be determined according to the default TCI state.

It should be noted that, when the interval between first time unit and the second time unit is less than the first threshold, the manner that terminal device uses the default TCI state to transmit the channel or signal may be applied to any of the three scenarios provided in the above embodiments.

Similar to the aforementioned embodiments, the default TCI state in the above embodiments may include one or more of:
a TCI state corresponding to a first CORESET, where the first CORESET is a CORESET at which DCI carrying the first information is located;
a TCI state corresponding to a second CORESET, where the second CORESET is a CORESET, identified as a first specified identifier, among one or more CORESETs monitored by the terminal device within a third time unit;
a TCI state configured by a network device;
a predefined TCI state; and
a TCI state, among one or more TCI states activated by an MAC CE, with a specified codepoint.

It should be noted that the first threshold may be determined based on a capability of the terminal device. Exemplarily, the first threshold may be a time-domain symbol length of 7, 14 or 28 symbols.

Optionally, the terminal device may report the first threshold to the network device, or the network device may determine the first threshold applicable to the terminal device according to capability information reported by the terminal device. As such, the network device may determine whether the terminal device receives the relevant channel/signal by using the default beam, according to a relationship between the first threshold and the time interval between the first time unit in which the first information is transmitted and the second time unit in which the relevant channel/signal is transmitted on the beam configured based on the first information.

Optionally, the terminal device may report the first threshold to the network device by multiplexing TimeDurationForQCL, or the terminal device may report the first threshold to the network device through a dedicated signaling, which is not limited in the embodiments of the present disclosure.

It should be noted that, in the above embodiments, each of the TCI states and the default TCI state may be a unified TCI state, for example, a joint TCI state or a downlink TCI state, which is not limited in the embodiments of the present disclosure.

Accordingly, in the configuration method according to the embodiments of the present disclosure, the terminal device can determine, according to the first information transmitted by the network device, the beam information for the plurality of CCs in different transmission modes at once. In other words, the beam information for the plurality of CCs can be updated through the single signaling, which not only can reduce the signaling overhead, but also reduce the overhead and delay for the beam indication, thereby improving the performance of the communication system. Furthermore, the configuration method according to the embodiments of the present disclosure also specifies which TCI state(s) indicated by the network device should be used by the CCs in different transmission modes, thereby ensuring the correct transmission of information.

Preferred implementations of the present disclosure have been described in detail above with reference to the accompanying drawings. However, the present disclosure is not limited to the specific details of the aforementioned implementations. Within the scope of the technical conception of the present disclosure, a variety of simple modifications may be made to the technical solution of the present disclosure, and such simple modifications shall fall within the scope of protection of the present disclosure. For example, various specific technical features described in the aforementioned specific embodiments may be combined in any suitable manner without contradiction, and various possible combinations are not further described in the present disclosure, in order to avoid unnecessary repetition. For another example, any combination may be made between various implementations of the present disclosure, as long as the combination does not depart from the idea of the present disclosure, and the combinations shall also be considered as the contents of the present disclosure. For another example, on the premise of no conflict, various embodiments described in the present disclosure and/or the technical features in the various embodiments may be combined with the related art in any manner. The technical solutions obtained after the combination shall also fall within the scope of protection of the present disclosure.

It should be understood that, in various method embodiments of the present disclosure, the size of the sequence number of the aforementioned processes does not imply the sequence of execution. The sequence of execution of the processes shall be determined by functions and inherent logic thereof, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, the term "downlink" is used to represent that the transmission direction of the signal or data is a first direction transmitted from a station to a user device in a cell; the term "uplink" is used to represent that the transmission direction of the signal or data is a second direction transmitted from the user device in the cell to the station; and the term "sidelink" is used to represent that the transmission direction of the signal or data is a third direction transmitted from a user device 1 to a user device 2. For example, a "downlink signal" means that the signal is transmitted in the first direction. In addition, in the embodiments of the present disclosure, the term "and/or" herein is only used to indicate an association relationship for describing associated objects, and represents that three kinds of relationships may exist. Specifically, "A and/or B" may represent three conditions, i.e., independent existence of A, existence of both A and B, and independent existence of B. Additionally, the character "/" in the present disclosure usually represents that previous and next associated objects form an "or" relationship.

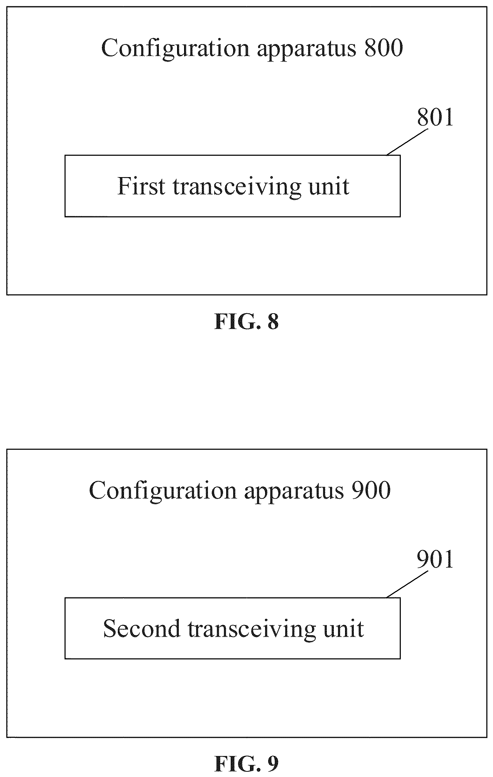

FIG. 8 is a schematic diagram of a first structural composition of a configuration apparatus according to an embodiment of the present disclosure. The configuration apparatus is applied to a terminal device, and as illustrated in FIG. 8, the configuration apparatus includes a first transceiving unit 801.

The first transceiving unit 801 is configured to receive first information, where the first information is used to configure beam information for a plurality of CCs, the beam information is applicable to the plurality of CCs, and the plurality of CCs support a plurality of transmission modes.

Optionally, the plurality of CCs may include one or more of: a first CC, a second CC and a third CC.

The first CC supports an sTRP transmission, the second CC supports an sDCI-mTRP transmission, and the third CC supports an mDCI-mTRP transmission.

Optionally, the plurality of CCs may include a first CC and a second CC, where the first CC supports the sTRP transmission, and the second CC supports the sDCI-mTRP transmission.

The first information may include one or more TCI states, the one or more TCI states may be indicated by the same TRP, and the beam information for the plurality of CCs may be determined based on the one or more TCI states, or a default TCI state.

Optionally, the first information may include a plurality of CCs, and the first transceiving unit 801 may be configured to receive second information, where the second information is used to indicate that beam information for at least part of the plurality of CCs is determined based on a first target TCI state, and the first target TCI state includes part or all of the plurality of TCI states in the first information.

Optionally, the plurality of TCI states may include a first TCI state and a second TCI state.

When a value of the second information is a first value, the first target TCI state may be the first TCI state, and the second information may be used to indicate that beam information for the first CC is determined based on the first TCI state.

When the value of the second information is a second value, the first target TCI state may be the second TCI state, and the second information may be used to indicate that the beam information for the first CC is determined based on the second TCI state.

When the value of the second information is a third value, the first target TCI state may be the first TCI state and the second TCI state, and the second information may be used to indicate that the beam information for the second CC is determined based on the first TCI state and the second TCI state.

When the value of the second information is a fourth value, the first target TCI state may be the default TCI state.

Optionally, the first information may include one TCI state, and the first transceiving unit 801 may be further configured to receive third information, where the third information is used to indicate that the beam information for the plurality of CCs is determined based on a second target TCI state, and the second target TCI state includes at least one of a TCI state in the first information or a specified TCI state.

The specified TCI state may be a TCI state used by the terminal device before receiving the first information.

Optionally, when a value of the third information is a first value, the second target TCI state may be the TCI state in the first information, and the third information may be used to indicate that beam information for the first CC is determined based on the TCI state in the first information.

When the value of the third information is a second value, the second target TCI state may be the specified TCI state, and the third information may be used to indicate that the beam information for the first CC is determined based on the specified TCI state.

When the value of the third information is a third value, the second target TCI state may be the TCI state in the first information and the specified TCI state, and the third information may be used to indicate that the beam information for the second CC is determined based on the TCI state in the first information and the specified TCI state.

When the value of the third information is a fourth value, the second target TCI state may be the default TCI state.

Optionally, the plurality of CCs may include a first CC and a third CC, the first CC supports the sTRP transmission, and the third CC supports the mDCI-mTRP transmission.

The first information may include one or more TCI states. Herein, when the first information includes a plurality of TCI states, the plurality of TCI states may be indicated by a plurality of TRPs.

Beam information for the CC that is associated with the same TRP, among the plurality of CCs, may be determined based on the TCI state indicated by the TRP.

Optionally, for each of the plurality of CCs, the TRP associated with the CC may be determined based on an index value of a CORESET group configured for the CC. The CORESET groups corresponding to the plurality of CCs associated with the same TRP may have the same index value.

Optionally, the plurality of CCs may include a second CC and a third CC, where the second CC supports the sTRP-mTRP transmission, and the third CC supports the mDCI-mTRP transmission.

The first information may include a plurality of TCI states, and the plurality of TCI states may be indicated by a plurality of TRPs.

Beam information for the third CC may be determined based on the TCI state indicated by the TRP associated with the third CC.

Beam information for the second CC may be determined based on the first TCI state and the second TCI state, and the first TCI state and the second TCI state may be associated with the TCI states indicated by different TRPs.

Optionally, the plurality of CCs may include a second CC and a third CC, where the second CC supports the sTRP-mTRP transmission, and the third CC supports the mDCI-mTRP transmission.

The first information may include one or more TCI states. When the first information includes a plurality of TCI states, the plurality of TCI states may be indicated by the same TRP.

Beam information for the second CC may be determined based on the one or more TCI states.

The one or more TCI states may be associated with one or more TRPs, and beam information for the third CC may be determined based on the TCI state associated with the TRP that is associated with the third CC.

Optionally, when a time interval between a first time unit for transmitting the first information and a second time unit is less than a first threshold, and the second time unit is a time unit for transmitting a channel or a signal based on beam information configured by the first information, the channel or the signal may be transmitted by the terminal device based on beam information indicated by a default TCI state.

Optionally, the default TCI state includes one or more of:
a TCI state corresponding to a first CORESET, where the first CORESET is a CORESET at which DCI carrying the first information is located;
a TCI state corresponding to a second CORESET, where the second CORESET is a CORESET, identified as a first specified identifier, among one or more CORESETs monitored by the terminal device within a third time unit;
a TCI state configured by a network device;
a predefined TCI state; and
a TCI state, among one or more TCI states activated by an MAC CE, with a specified codepoint.

Optionally, the TCI state may include a unified TCI state or a downlink TCI state.

It should be understood by those skilled in the art that the relevant description of the aforementioned configuration apparatus in the embodiments of the present disclosure may be understood with reference to the relevant description of the configuration method in the embodiments of the present disclosure.

FIG. 9 is a schematic diagram of a second structural composition of a configuration apparatus according to an embodiment of the present disclosure. The configuration apparatus is applied to a network device, and as illustrated in FIG. 9, the configuration apparatus includes a second transceiving unit 901.

The second transceiving unit 901 is configured to transmit first information, where the first information is used to configure beam information for a plurality of CCs in a terminal device, the beam information is applicable to the plurality of CCs, and the plurality of CCs support a plurality of transmission modes.

Optionally, the plurality of CCs may include one or more of: a first CC, a second CC and a third CC.

The first CC supports an sTRP transmission, the second CC supports an sDCI-mTRP transmission, and the third CC supports an mDCI-mTRP transmission.

Optionally, the plurality of CCs may include a first CC and a second CC, where the first CC supports the sTRP transmission, and the second CC supports the sDCI-mTRP transmission.

The first information may include one or more TCI states, the one or more TCI states may be indicated by the same TRP, and the beam information for the plurality of CCs may be determined based on the one or more TCI states, or a default TCI state.

Optionally, the first information may include a plurality of CCs, and the second transceiving unit 901 may be configured to transmit second information to the terminal device, where the second information is used to indicate that beam information for at least part of the plurality of CCs is determined based on a first target TCI state, and the first target TCI state includes part or all of the plurality of TCI states in the first information.

Optionally, the plurality of TCI states may include a first TCI state and a second TCI state.

When a value of the second information is a first value, the first target TCI state may be the first TCI state, and the second information may be used to indicate that beam information for the first CC is determined based on the first TCI state.

When the value of the second information is a second value, the first target TCI state may be the second TCI state, and the second information may be used to indicate that the beam information for the first CC is determined based on the second TCI state.

When the value of the second information is a third value, the first target TCI state may be the first TCI state and the second TCI state, and the second information may be used to indicate that the beam information for the second CC is determined based on the first TCI state and the second TCI state.

When the value of the second information is a fourth value, the first target TCI state may be the default TCI state.

Optionally, the first information may include one TCI state, and the second transceiving unit 901 may be configured to transmit third information to the terminal device, where the third information is used to indicate that the beam information for the plurality of CCs is determined based on a second target TCI state, and the second target TCI state includes at least one of a TCI state in the first information or a specified TCI state.

The specified TCI state may be a TCI state used by the terminal device before receiving the first information.

Optionally, when a value of the third information is a first value, the second target TCI state may be the TCI state in the first information, and the third information may be used to indicate that beam information for the first CC is determined based on the TCI state in the first information.

When the value of the third information is a second value, the second target TCI state may be the specified TCI state, and the third information may be used to indicate that the beam information for the first CC is determined based on the specified TCI state.

When the value of the third information is a third value, the second target TCI state may be the TCI state in the first information and the specified TCI state, and the third information may be used to indicate that the beam information for the second CC is determined based on the TCI state in the first information and the specified TCI state.

When the value of the third information is a fourth value, the second target TCI state may be the default TCI state.

Optionally, the plurality of CCs may include a first CC and a third CC, the first CC supports the sTRP transmission, and the third CC supports the mDCI-mTRP transmission.

The first information may include one or more TCI states. Herein, when the first information includes a plurality of TCI states, the plurality of TCI states may be indicated by a plurality of TRPs.

Beam information for the CC that is associated with the same TRP, among the plurality of CCs, may be determined based on the TCI state indicated by the TRP.

Optionally, for each of the plurality of CCs, the TRP associated with the CC may be determined based on an index value of a CORESET group configured for the CC. The CORESET groups corresponding to the plurality of CCs associated with the same TRP may have the same index value.

Optionally, the plurality of CCs may include a second CC and a third CC, where the second CC supports the sTRP-mTRP transmission, and the third CC supports the mDCI-mTRP transmission.

The first information may include a plurality of TCI states, and the plurality of TCI states may be indicated by a plurality of TRPs.

Beam information for the third CC may be determined based on the TCI state indicated by the TRP associated with the third CC.

Beam information for the second CC may be determined based on the first TCI state and the second TCI state, and the first TCI state and the second TCI state may be associated with the TCI states indicated by different TRPs.

Optionally, the plurality of CCs may include a second CC and a third CC, where the second CC supports the sTRP-mTRP transmission, and the third CC supports the mDCI-mTRP transmission.

The first information may include one or more TCI states. When the first information includes a plurality of TCI states, the plurality of TCI states may be indicated by the same TRP.

Beam information for the second CC may be determined based on the one or more TCI states.

The one or more TCI states may be associated with one or more TRPs, and beam information for the third CC may be determined based on the TCI state associated with the TRP that is associated with the third CC.

Optionally, when a time interval between a first time unit for transmitting the first information and a second time unit is less than a first threshold, and the second time unit is a time unit for transmitting a channel or a signal based on beam information configured by the first information, the network device may determine that the channel or the signal is transmitted by the terminal device based on beam information indicated by a default TCI state.

Optionally, the default TCI state includes one or more of:
a TCI state corresponding to a first CORESET, where the first CORESET is a CORESET at which DCI carrying the first information is located;
a TCI state corresponding to a second CORESET, where the second CORESET is a CORESET, identified as a first specified identifier, among one or more CORESETs monitored by the terminal device within a third time unit;
a TCI state configured by a network device;
a predefined TCI state; and
a TCI state, among one or more TCI states activated by an MAC CE, with a specified codepoint.

Optionally, the TCI state may include a unified TCI state or a downlink TCI state.

It should be understood by those skilled in the art that the relevant description of the above configuration apparatus in the embodiments of the present disclosure may be understood with reference to relevant description of the configuration method in the embodiments of the present disclosure.

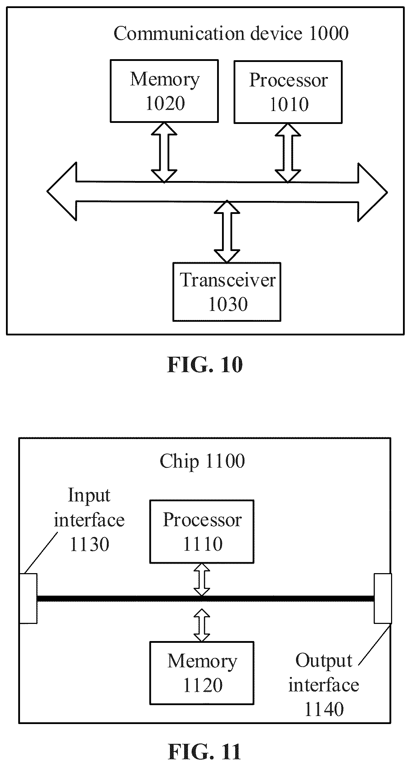

FIG. 10 is a schematic structural diagram of a communication device 1000 according to an embodiment of the present disclosure. The communication device may be a terminal device or a network device. The communication device 1000 illustrated in FIG. 10 includes a processor 1010. The processor 1010 may be configured to call and run a computer program stored in a memory to perform the method according to the embodiments of the present disclosure.

Optionally, as illustrated in FIG. 10, the communication device 1000 may further include a memory 1020. Herein, the processor 1010 may be configured to call and run the computer program stored in the memory 1020 to perform the method according to the embodiments of the present disclosure.

Herein, the memory 1020 may be a separate device independent of the processor 1010, or may be integrated into the processor 1010.

Optionally, as illustrated in FIG. 10, the communication device 1000 may further include a transceiver 1030. The processor 1010 may control the transceiver 1030 to communicate with other devices. Specifically, the transceiver 1030 may transmit information or data to other devices, or receive information or data from other devices.

Herein, the transceiver 1030 may include a transmitter and a receiver. The transceiver 1030 may further include one or more antennas.

Optionally, the communication device 1000 may specifically be the network device in the embodiments of the present disclosure. The communication device 1000 may implement corresponding processes that are implemented by the network device in each method of the embodiments of the present disclosure. For brevity, details are not elaborated herein again.

Optionally, the communication device 1000 may specifically be the terminal device in the embodiments of the present disclosure. The communication device 1000 may implement corresponding processes that are implemented by the mobile terminal/terminal device in each method of the embodiments of the present disclosure. For brevity, details are not elaborated herein again.

FIG. 11 is a schematic structural diagram of a chip provided in an embodiment of the present disclosure. The chip 1100 illustrated in FIG. 11 includes a processor 1110. The processor 1110 may be configured to call and run a computer program stored in a memory to perform the method according to the embodiments of the present disclosure.

Optionally, as illustrated in FIG. 11, the chip 1100 may further include a memory 1120. Herein, the processor 1110 may be configured to call and run the computer program stored in the memory 1120 to perform the method according to the embodiments of the present disclosure.

Herein, the memory 1120 may be a separate device independent of the processor 1110, or may be integrated into the processor 1110.

Optionally, the chip 1100 may further include an input interface 1130. Herein, the processor 1110 may control the input interface 1130 to communicate with other devices or chips. Specifically, the input interface 1130 may obtain information or data from other devices or chips.

Optionally, the chip 1100 may further include an output interface 1140. Herein, the processor 1110 may control the output interface 1140 to communicate with other devices or chips. Specifically, the output interface 1140 may output information or data to other devices or chips.

Optionally, the chip may be applied to the network device in the embodiments of the present disclosure. The chip may implement the corresponding processes implemented by the network device in each method of the embodiments of the present disclosure. For brevity, details are not elaborated herein again.

Optionally, the chip may be applied to the mobile terminal/terminal device in embodiments of the present disclosure. The chip may implement the corresponding processes implemented by the mobile terminal/terminal device in each method of the embodiments of the present disclosure. For brevity, details are not described herein again.

It should be understood that, the chip referred to in the embodiments of the present disclosure may also be referred to as a system-level chip, a system chip, a chip system, or a system-on-chip, etc.

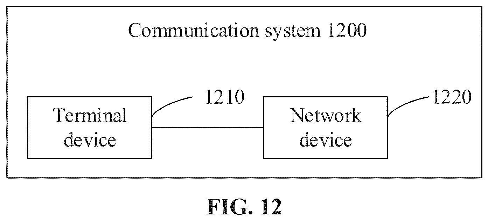

FIG. 12 is a schematic block diagram of a communication system 1200 according to an embodiment of the present disclosure. As illustrated in FIG. 12, the communication system 1200 includes a terminal device 1210 and a network device 1220.

Herein, the terminal device 1210 may be configured to implement the corresponding functions implemented by the terminal device in the foregoing method. The network device 1220 may be configured to implement the corresponding functions implemented by the network device in the foregoing method. For brevity, details are not elaborated herein again.

It should be understood that the processor in the embodiments of the present disclosure may be an integrated circuit chip having a signal processing capability. During an implementation process, various operations in the aforementioned method embodiments may be implemented by using an integrated logic circuit in a hardware form in the processor or implemented by using instructions in a software form. The foregoing processor may be a general-purpose processor, a digital signal processor (DSP), an application-specific integrated circuit (ASIC), a field programmable gate array (FPGA), or another programmable logical device, discrete gate or transistor logical device, or discrete hardware component. Various methods, operations and logical block diagrams disclosed in the embodiments of the present disclosure may be implemented or executed. The general-purpose processor may be a microprocessor, or the processor may be any conventional processor or the like. Operations in combination with the method disclosed in the embodiments of the present disclosure may be directly embodied to be executed and completed by a hardware decoding processor, or by a combination of hardware and software modules in the decoding processor. The software module may be located in a mature storage medium in the field, such as a random access memory (RAM), a flash memory, a read-only memory (ROM), a programmable ROM (PROM), an electrically-erasable programmable memory, a register a register, or the like. The storage medium is located in the memory, and the processor reads information in the memory to complete the operations of the foregoing methods in combination with hardware of the processor.

It can be understood that the memory in the embodiments of the present disclosure may be a volatile memory or a non-volatile memory, or may include both the volatile memory and the non-volatile memory. The non-volatile memory may be an ROM, a PROM, an erasable PROM (EPROM), an electrically EPROM (EEPROM) or a flash memory. The volatile memory may be an RAM and is used as an external high-speed cache. It is exemplarily but unlimitedly described that RAMs in various forms may be adopted, such as a static RAM (SRAM), a dynamic RAM (DRAM), a synchronous DDRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and methods described herein is intended to include, but not be limited to, memories of these and any other suitable types.

It should be understood that the aforementioned memory is described only exemplarily rather than limitedly. For example, the memory in the embodiments of the present disclosure may be an SRAM, a DRAM, an SDRAM, a DDR SDRAM, an ESDRAM, an SLDRAM, a DR RAM, or the like. That is, the memory in the embodiments of the present disclosure is intended to include, but not be limited to, memories of these and any other suitable types.

An embodiment of the present disclosure further provides a computer-readable storage medium configured to store a computer program.

Optionally, the computer-readable storage medium may be applied to the network device in the embodiments of the present disclosure, and the computer program causes a computer to perform the corresponding processes performed by the network device in various methods of the embodiments of the present disclosure. For brevity, details are not elaborated herein again.

Optionally, the computer-readable storage medium may be applied to the terminal device in the embodiments of the present disclosure, and the computer program causes a computer to perform the corresponding processes performed by the terminal device in various methods of the embodiments of the present disclosure. For brevity, details are not described herein again.

An embodiment of the present disclosure further provides a computer program product, which includes computer program instructions.

Optionally, the computer program product may be applied to the network device in the embodiments of the present disclosure, and the computer program instructions cause a computer to perform the corresponding processes performed by the network device in various methods of the embodiments of the present disclosure. For brevity, details are not elaborated herein again. Optionally, the computer program product may be applied to the terminal device in the embodiments of the present disclosure, and the computer program instructions cause a computer to perform the corresponding processes performed by the terminal device in various methods of the embodiments of the present disclosure. For brevity, details are not described herein again.

An embodiment of the present disclosure further provides a computer program. Optionally, the computer program may be applied to the network device in the embodiments of the present disclosure, and the computer program, when is run on a computer, causes the computer to perform the corresponding processes performed by the network device in various methods of the embodiments of the present disclosure. For brevity, details are not elaborated herein again. Optionally, the computer program may be applied to the terminal device in the embodiments of the present disclosure, and the computer program, when is run on a computer, causes the computer to perform the corresponding processes performed by the terminal device in various methods of the embodiments of the present disclosure. For brevity, details are not described herein again.

Those of ordinary skill in the art may realize that units and algorithm steps of various examples described in combination with the embodiments disclosed herein may be implemented by electronic hardware, or a combination of computer software and electronic hardware. Whether the functions are executed in a hardware or software manner depends on specific applications and design constraints of the technical solutions. Professionals may implement the described functions for each specific application by using different methods, but such implementations shall not be regarded as outside the scope of the present disclosure.

It may be clearly understood by those skilled in the art that, for the specific working processes of the systems, apparatuses and units described above, reference may be made to the corresponding processes in the aforementioned method embodiments, and such specific working processes of the systems, devices and units are not described herein again for the purpose of convenient and brief description,.

In some embodiments provided in the present disclosure, it should be understood that the disclosed systems, apparatuses and methods may be implemented in other manners. For example, the apparatus embodiments described above are merely exemplary. For example, the division of the units is merely a kind of logical function division, and other division manners may be adopted during practical implementation. For example, multiple units or components may be combined or integrated into another system, or some features may be neglected or not performed. In addition, mutual coupling or direct coupling or communication connection between various displayed or discussed components may be indirect coupling or communication connection, implemented through some interfaces, of the apparatuses or units, and may be implemented in electrical, mechanical or other forms.

The units described as separate components may be or may not be physically separate, and the components displayed as units may be or may not be physical units, that is, may be located in one place, or may be distributed on multiple network units. Some or all of the units may be selected to achieve the objectives of the solutions of the embodiments according to practical requirements.

In addition, various functional units in various embodiments of the present disclosure may be integrated into one processing unit, or each of the functional units may exist physically and separately, or two or more functional units may be integrated into one unit.

When the above functions are implemented in the form of a software functional module and sold or used as an independent product, the functions may be stored in a computer-readable storage medium. Based on such understanding, the essential part of the technical solutions of the present disclosure or a part of the technical solutions that contributes to the related art or a part of the technical solutions can be embodied in a form of a software product. The computer software product is stored in a storage medium, and includes several instructions to enable a computer device (which may be a personal computer, a server, or a network device, etc.) to perform all or a part of the operations of the methods described in the embodiments of the present disclosure. The foregoing storage medium includes various media that can store program codes, such as a USB flash disk, a mobile hard disk, an ROM, an RAM, a magnetic disk, or an optical disk, etc.

The foregoing are merely specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claims.

## Claims

1. A configuration method, comprising:
receiving, by a terminal device, first information, the first information being used to configure beam information for a plurality of component carriers (CCs), the plurality of CCs supporting a plurality of transmission modes, and the beam information being applicable to the plurality of CCs.

2. The method of claim 1, wherein the plurality of CCs comprises one or more of:
a first CC, a second CC and a third CC; and
wherein the first CC supports a single transmission/reception point (sTRP) transmission, the second CC supports a single-downlink control information multi-transmission/reception point (sDCI-mTRP) transmission, and the third CC supports a multi-downlink control information multi-transmission/reception point (mDCI-mTRP) transmission.

3. The method of claim 1 or 2, wherein the plurality of CCs comprise a first CC and a second CC, the first CC supports an sTRP transmission, and the second CC supports an sDCI-mTRP transmission; and
wherein the first information comprises one or more transmission configuration indicator (TCI) states, the one or more TCI states are indicated by a same TRP, and the beam information for the plurality of CCs is determined based on the one or more TCI states, or a default TCI state.

4. The method of claim 3, wherein the first information comprises a plurality of TCI states, and the method further comprises:
receiving, by the terminal device, second information, the second information being used to indicate that beam information for at least part of the plurality of CCs is determined based on a first target TCI state, and the first target TCI state comprising part or all of the plurality of TCI states in the first information.

5. The method of claim 4, wherein the plurality of TCI states comprise a first TCI state and a second TCI state; and wherein
when a value of the second information is a first value, the first target TCI state is the first TCI state, and the second information is used to indicate that beam information for the first CC is determined based on the first TCI state;
when the value of the second information is a second value, the first target TCI state is the second TCI state, and the second information is used to indicate that the beam information for the first CC is determined based on the second TCI state;
when the value of the second information is a third value, the first target TCI state is the first TCI state and the second TCI state, and the second information is used to indicate that beam information for the second CC is determined based on the first TCI state and the second TCI state; and
when the value of the second information is a fourth value, the first target TCI state is the default TCI state.

6. The method of claim 3, wherein the first information comprises one TCI state, and the method further comprises:
receiving, by the terminal device, third information, the third information being used to indicate that the beam information for the plurality of CCs is determined based on a second target TCI state, and the second target TCI state comprising a TCI state in the first information and/or a specified TCI state, and
wherein the specified TCI state is a TCI state used by the terminal device before receiving the first information.

7. The method of claim 6, wherein
when a value of the third information is a first value, the second target TCI state is the TCI state in the first information, and the third information is used to indicate that beam information for the first CC is determined based on the TCI state;
when the value of the third information is a second value, the second target TCI state is the specified TCI state, and the third information is used to indicate that the beam information for the first CC is determined based on the specified TCI state;
when the value of the third information is a third value, the second target TCI state is the TCI state in the first information and the specified TCI state, and the third information is used to indicate that the beam information for the second CC is determined based on the TCI state and the specified TCI state; and
when the value of the third information is a fourth value, the second target TCI state is the default TCI state.

8. The method of claim 1 or 2, wherein the plurality of CCs comprise a first CC and a third CC, the first CC supports an sTRP transmission, and the third CC supports an mDCI-mTRP transmission; and wherein
the first information comprises one or more TCI states, and when the first information comprises a plurality of TCI states, the plurality of TCI states are indicated by a plurality of TRPs; and
beam information for a CC, among the plurality of CCs, that is associated with a same TRP is determined based on a TCI state indicated by the TRP.

9. The method of claim 8, wherein
for each of the plurality of CCs, a TRP associated with the CC is determined based on an index value of a control resource set group configured for the CC, and index values of control resource set groups corresponding to a plurality of CCs associated with the same TRP are the same.

10. The method of claim 1 or 2, wherein the plurality of CCs comprise a second CC and a third CC, the second CC supports an sDCI-mTRP transmission, and the third CC supports an mDCI-mTRP transmission; and wherein
the first information comprises a plurality of TCI states, and the plurality of TCI states are indicated by a plurality of TRPs;
beam information for the third CC is determined based on a TCI state indicated by a TRP associated with the third CC; and
beam information for the second CC is determined based on a first TCI state and a second TCI state, and the first TCI state and the second TCI state are associated with TCI states indicated by different TRPs.

11. The method of claim 1 or 2, wherein the plurality of CCs comprise a second CC and a third CC, the second CC supports an sDCI-mTRP transmission, and the third CC supports an mDCI-mTRP transmission; and wherein
the first information comprises one or more TCI states, and when the first information comprises a plurality of TCI states, the plurality of TCI states are indicated by a same TRP;
beam information for the second CC is determined based on the one or more TCI states; and
the one or more TCI states are associated with one or more TRPs, and beam information for the third CC is determined based on a TCI state associated with a TRP that is associated with the third CC.

12. The method of any one of claims 1 to 11, wherein
when a time interval between a first time unit for transmitting the first information and a second time unit is less than a first threshold, and the second time unit is a time unit for transmitting a channel or a signal based on beam information configured by the first information, the channel or the signal is transmitted by the terminal device based on beam information indicated by a default TCI state.

13. The method of any one of claims 3 to 7 and 12, wherein the default TCI state comprises one or more of:
a TCI state corresponding to a first control resource set (CORESET), the first CORESET being a CORESET at which DCI carrying the first information is located;
a TCI state corresponding to a second CORESET, the second CORESET being a CORESET, identified as a first specified identifier, among one or more CORESETs monitored by the terminal device within a third time unit;
a TCI state configured by a network device;
a predefined TCI state; and
a TCI state, among one or more TCI states activated by a media access control control element (MAC CE), with a specified codepoint.

14. The method of any one of claims 1 to 13, wherein a TCI state comprises a unified TCI state or a downlink TCI state.

15. A configuration method, comprising:
transmitting, by a network device, first information, the first information being used to configure beam information for a plurality of component carriers (CCs) for a terminal device, the plurality of CCs supporting a plurality of transmission modes, and the beam information being applicable to the plurality of CCs.

16. The method of claim 15, wherein the plurality of CCs comprises one or more of:
a first CC, a second CC and a third CC; and
wherein the first CC supports a single transmission/reception point (sTRP) transmission, the second CC supports a single-downlink control information multi-transmission/reception point (sDCI-mTRP) transmission, and the third CC supports a multi-downlink control information multi-transmission/reception point (mDCI-mTRP) transmission.

17. The method of claim 15 or 16, wherein the plurality of CCs comprise a first CC and a second CC, the first CC supports an sTRP transmission, and the second CC supports an sDCI-mTRP transmission; and
wherein the first information comprises one or more transmission configuration indicator (TCI) states, the one or more TCI states are indicated by a same TRP, and the beam information for the plurality of CCs is determined based on the one or more TCI states, or a default TCI state.

18. The method of claim 17, wherein the first information comprises a plurality of TCI states, and the method further comprises:
transmitting, by the network device to the terminal device, second information, the second information being used to indicate that beam information for at least part of the plurality of CCs is determined based on a first target TCI state, and the first target TCI state comprising part or all of the plurality of TCI states in the first information.

19. The method of claim 18, wherein the plurality of TCI states comprise a first TCI state and a second TCI state; and wherein
when a value of the second information is a first value, the first target TCI state is the first TCI state, and the second information is used to indicate that beam information for the first CC is determined based on the first TCI state;
when the value of the second information is a second value, the first target TCI state is the second TCI state, and the second information is used to indicate that the beam information for the first CC is determined based on the second TCI state;
when the value of the second information is a third value, the first target TCI state is the first TCI state and the second TCI state, and the second information is used to indicate that beam information for the second CC is determined based on the first TCI state and the second TCI state; and
when the value of the second information is a fourth value, the first target TCI state is the default TCI state.

20. The method of claim 17, wherein the first information comprises one TCI state, and the method further comprises:
transmitting, by the network device to the terminal device, third information, the third information being used to indicate that the beam information for the plurality of CCs is determined based on a second target TCI state, and the second target TCI state comprising a TCI state of the first information and/or a specified TCI state, and
wherein the specified TCI state is a TCI state used by the terminal device before receiving the first information.

21. The method of claim 20, wherein
when a value of the third information is a first value, the second target TCI state is the TCI state in the first information, and the third information is used to indicate that beam information for the first CC is determined based on the TCI state;
when the value of the third information is a second value, the second target TCI state is the specified TCI state, and the third information is used to indicate that the beam information for the first CC is determined based on the specified TCI state;
when the value of the third information is a third value, the second target TCI state is the TCI state in the first information and the specified TCI state, and the third information is used to indicate that the beam information for the second CC is determined based on the TCI state and the specified TCI state; and
when the value of the third information is a fourth value, the second target TCI state is the default TCI state.

22. The method of claim 15 or 16, wherein the plurality of CCs comprise a first CC and a third CC, the first CC supports an sTRP transmission, and the third CC supports an mDCI-mTRP transmission; and wherein
the first information comprises one or more TCI states, and when the first information comprises a plurality of TCI states, the plurality of TCI states are indicated by a plurality of TRPs; and
beam information for a CC, among the plurality of CCs, that is associated with a same TRP is determined based on a TCI state indicated by the TRP.

23. The method of claim 22, wherein for each of the plurality of CCs, a TRP associated with the CC is determined based on an index value of a control resource set group configured for the CC, and index values of control resource set groups corresponding to a plurality of CCs associated with the same TRP are the same.

24. The method of claim 15 or 16, wherein the plurality of CCs comprise a second CC and a third CC, the second CC supports an sDCI-mTRP transmission, and the third CC supports an mDCI-mTRP transmission; and wherein
the first information comprises a plurality of TCI states, and the plurality of TCI states are indicated by a plurality of TRPs;
beam information for the third CC is determined based on a TCI state indicated by a TRP associated with the third CC; and
beam information for the second CC is determined based on a first TCI state and a second TCI state, and the first TCI state and the second TCI state are associated with TCI states indicated by different TRPs.

25. The method of claim 15 or 16, wherein the plurality of CCs comprise a second CC and a third CC, the second CC supports an sDCI-mTRP transmission, and the third CC supports an mDCI-mTRP transmission; and wherein
the first information comprises one or more TCI states, and when the first information comprises a plurality of TCI states, the plurality of TCI states are indicated by a same TRP;
beam information for the second CC is determined based on the one or more TCI states; and
the one or more TCI states are associated with one or more TRPs, and beam information for the third CC is determined based on a TCI state associated with a TRP that is associated with the third CC.

26. The method of any one of claims 15 to 2, wherein
when a time interval between a first time unit for transmitting the first information and a second time unit is less than a first threshold, and the second time unit is a time unit for transmitting a channel or a signal based on beam information configured by the first information, the network device determines that the channel or the signal is transmitted by the terminal device based on beam information indicated by a default TCI state.

27. The method of any one of claims 17 to 21 and 26, wherein the default TCI state comprises one or more of:
a TCI state corresponding to a first control resource set (CORESET), the first CORESET being a CORESET at which DCI carrying the first information is located;
a TCI state corresponding to a second CORESET, the second CORESET being a CORESET, identified as a first specified identifier, among one or more CORESETs monitored by the terminal device within a third time unit;
a TCI state configured by a network device;
a predefined TCI state; and
a TCI state, among one or more TCI states activated by a media access control control element (MAC CE), with a specified codepoint.

28. The method of any one of claims 15 to 27, wherein a TCI state comprises a unified TCI state or a downlink TCI state.

29. A configuration apparatus, applied to a terminal device, the apparatus comprising:
a first transceiving unit, configured to receive first information, the first information being used to configure beam information for a plurality of component carriers (CCs), the plurality of CCs supporting a plurality of transmission modes, and the beam information being applicable to the plurality of CCs.

30. A configuration apparatus, applied to a network device, the apparatus comprising:
a second transceiver unit, configured to transmit first information, the first information being used to configure beam information for a plurality of component carriers (CCs) for a terminal device, the plurality of CCs supporting a plurality of transmission modes, and the beam information being applicable to the plurality of CCs.

31. A terminal device, comprising a memory, a processor and a transceiver, wherein
the transceiver is configured to perform communication with a network device;
a computer program executable by the processor is stored on the memory, and
the processor, when executing the computer program in combination with the transceiver, performs the method of any one of claims 1 to 14.

32. A network device, comprising a memory, a processor and a transceiver, wherein
the transceiver is configured to perform communication with a terminal device;
a computer program executable by the processor is stored on the memory, and
the processor, when executing the computer program in combination with the transceiver, performs the method of any one of claims 15 to 28.

33. A computer storage medium storing one or more programs executable by one or more processors that, when executing the one or more programs, perform the method of any of claims 1 to 14 or the method of any one of claims 15 to 28.

34. A chip, comprising a processor configured to call a computer program from a memory and run the computer program to cause a device mounted with the chip to perform the method of any one of claims 1 to 14 or the method of any one of claims 15 to 28.

35. A computer program product, comprising a computer storage medium storing a computer program, wherein the computer program comprises instructions executable by at least one processor that, when executing the instructions, perform the method of any one of claims 1 to 14 or the method of any one of claims 15 to 28.

36. A computer program, wherein the computer program is run by a computer to perform the method of any one of claims 1 to 14 or the method of any one of claims 15 to 28.
